# EUROPEAN PATENT APPLICATION

(11) **EP 3 858 901 A1**
(43) Date of publication of application: **04.08.2021**
(21) Application number: 19867494.7
(22) Date of filing: 25.09.2019
(51) Int. Cl.: C08J 7/02, B32B 27/22, B32B 27/30, C03C 27/12, C08J 5/18

(54) **METHOD FOR PRODUCING POLY(VINYL ACETAL) RESIN FILM CONTAINING PLASTICIZER ABSORBED THEREIN**

(30) Priority: 26.09.2018 JP 2018180926
(71) Applicant: Kuraray Co., Ltd., Kurashiki-shi, Okayama 710-0801 (JP)
(72) Inventor: ISOUE, Koichiro, Kurashiki-shi, Okayama 713-8550 (JP)
(74) Representative: Müller-Boré & Partner Patentanwälte PartG mbB
(86) International application number: PCT/JP2019/037439
(87) International publication number: WO 2020/067082

(57) **Abstract**

The present invention relates to a method for producing a polyvinyl acetal resin film containing a plasticizer absorbed therein, comprising: a contact step of bringing a liquid plasticizer into contact with a polyvinyl acetal resin film; and a heating step of heating the polyvinyl acetal resin film that has been contacted with the liquid plasticizer, wherein an amount of a plasticizer in the polyvinyl acetal resin film before the contact step is 0 to 20% by mass based on a total mass of the polyvinyl acetal resin film.

## Description

### TECHNICAL FIELD

The present invention relates to a method for producing a polyvinyl acetal resin film containing a plasticizer absorbed therein.

### BACKGROUND ART

As a method of imparting functions to a laminated glass, studies have been conducted to impart functions to an intermediate film for a laminated glass (hereinafter, may be referred to as "intermediate film"). However, when imparting new functions to an intermediate film itself various kinds of intermediate films need to be prepared that correspond to numerous combinations of various colors and thicknesses and other conventionally publicly-known functions. Thus, as a method of imparting new functions, it has been proposed to prepare an intermediate film by laminating a no- (or low-content) plasticizer-containing polyvinyl acetal resin film and a plurality of existing films that have various functions (e.g. Patent Document 1). However, when a no- (or low-content) plasticizer-containing polyvinyl acetal resin film is laminated with a high-content plasticizer-containing film superior in penetration resistance, sound insulating properties, or the like, the plasticizer migrates from the latter to the former, so that problems may occur such as optical unevenness, or decrease in plasticizer concentration in the entire intermediate film, resulting in reduced penetration resistance or sound insulating properties.

To impart a functional layer to a polyvinyl acetal resin film, there has been proposed a method of coating a solution containing a functional material on a polyvinyl acetal resin film (e.g. Patent Document 2). However, in the heating step for removing a solvent from the coated solution containing the functional material, problems may occur such as deformation of a polyvinyl acetal resin film having a low glass transition temperature, and cracks or wrinkles in the coating film. To avoid such deformation or the like, there has been proposed a liquid coating material that can be dried at low temperature (e.g. Patent Document 3); however, when a low-boiling solvent that can be dried at low temperature is used in the liquid coating material, occasionally the liquid coating material is dried and firmly fixed, causing a failure in continuous operation.

Patent Document 4 proposes, in producing a laminated glass laminate using a plasticizer-containing polyvinyl acetal sheet and a low-content plasticizer-containing polyvinyl acetal sheet, in order to place the sheets correctly, a method of adhering and fixing a low-content (or no-) plasticizer-containing polyvinyl acetal sheet onto a plasticizer-containing polyvinyl acetal sheet or plate glass by a liquid In addition, Patent Document 4 discloses that, as the liquid, the plasticizer contained in the polyvinyl acetal sheet may be used. However, Patent Document 4 does not disclose allowing the plasticizer to be absorbed in the polyvinyl acetal sheet by heat. Without such a heating step, the polyvinyl acetal sheet may have insufficient adhesion with the laminated sheet or glass, and shifting may be likely to occur therebetween, so that higher adhesion may be required.

### PRIOR ART DOCUMENTS

### PATENT DOCUMENTS

Patent Document 1: JP-A-2015-196612
Patent Document 2: JP-A-2011-515315
Patent Document 3: JP-A-6-328625
Patent Document 4: JP-A-2015-147725

### SUMMARY OF THE INVENTION

### PROBLEMS TO BE SOLVED BY THE INVENTION

An object to be solved by the present invention is to provide a method of easily plasticizing or functionalizing a polyvinyl acetal resin film. Above all, in particular, provided are (1) a method of laminating a polyvinyl acetal resin film and a functional film or functional layer, (2) a method of imparting a function to a polyvinyl acetal resin film by printing or coating, and (3) a method of plasticizing a polyvinyl acetal resin film with functionalities imparted thereto.

### SOLUTIONS TO THE PROBLEMS

The present inventors have conducted further studies in detail on a polyvinyl acetal resin film used in an intermediate film to solve the above object and completed the present invention.

That is, the present invention includes the following suitable embodiments.
[1] A method for producing a polyvinyl acetal resin film containing a plasticizer absorbed therein, comprising: a contact step of bringing a liquid plasticizer into contact with a polyvinyl acetal resin film; and a heating step of heating the polyvinyl acetal resin film that has been contacted with the liquid plasticizer, wherein an amount of a plasticizer in the polyvinyl acetal resin film before the contact step is 0 to 20% by mass based on a total mass of the polyvinyl acetal resin film.
[2] A method for producing a functional layer (A)-attached polyvinyl acetal resin film having a polyvinyl acetal resin film containing a plasticizer absorbed therein obtainable by the method according to [1] and a functional layer (A), comprising a lamination step of laminating the polyvinyl acetal resin film that has been contacted with the liquid plasticizer and a functional layer (A) such that a liquid plasticizer contact surface of the polyvinyl acetal resin film is in contact with the functional layer (A).
[3] The method according to [2], comprising, after the contact step and the heating step, a lamination step (i) of laminating the polyvinyl acetal resin film that has been contacted with the liquid plasticizer and a functional layer (B).
[4] The method according to [2], comprising, in the heating step, a lamination step (ii) of overlapping, heating, and laminating the liquid plasticizer contact surface and the functional layer (A).
[5] The method according to [2], comprising, in the contact step, a contact step with the functional layer (A) of bringing the liquid plasticizer into contact with the functional layer (A); and a step of overlapping an obtained liquid plasticizer contact surface of the functional layer (A) and the polyvinyl acetal resin film.
[6] The method according to [2] or [4], comprising, in the contact step, a step of injecting the liquid plasticizer between the polyvinyl acetal resin film and the functional layer (A); and a step of overlapping the polyvinyl acetal resin film, the liquid plasticizer, and the functional layer (A).
[7] The method according to any one of [2] to [6], wherein the functional layer (A) is one, two, or more layers selected from the group consisting of a colored layer, a light absorption layer, a light reflection layer, a sound insulating layer, a light scattering layer, a light emitting layer, an electrically conductive layer, a fiber layer, and a double-image-preventing layer.
[8] The method according to any one of [2] to [7], wherein the functional layer (A) is a layer that contains one or more resins selected from the group consisting of a polyvinyl acetal resin, a polyester resin, a polycarbonate resin, a (meth)acrylic-based resin, a polyolefin resin, and an ionomer resin as a resin component.
[9] The method according to [8], wherein the functional layer (A) is a layer that contains the polyvinyl acetal resin as the resin component and contains the plasticizer in an amount of less than 16% by mass based on a total mass of the functional layer (A).
[10] The method according to any one of [2] to [9], wherein the functional layer (A) has a thickness of 0.01 to 300 µm.
[11] The method according to any one of [1] to [10], wherein in the contact step, the liquid plasticizer is brought into contact with the polyvinyl acetal resin film in an amount of more than 0 part by mass and 50 parts by mass or less based on 100 parts by mass of the polyvinyl acetal resin film.
[12] A method for producing a laminated film of a polyvinyl acetal resin film containing a plasticizer absorbed therein obtainable by the method according to [1] and another film (C), comprising a lamination step of laminating the polyvinyl acetal resin film containing the plasticizer absorbed therein and another film (C).
[13] A method for producing a laminated film of a functional layer (A)-attached polyvinyl acetal resin film obtainable by the method according to anyone of [2] to [10] and another film (C), comprising a lamination step of laminating the functional layer (A)-attached polyvinyl acetal resin film and another film (C).
[14] The method according to [12] or [13], wherein the another film (C) is a resin film with one or more layers each having any function of a coloring function, a sound insulating function, a thermally insulating function, a light emitting function, a protective function, an electrical conductive function, or a double-image-preventing function.
[15] The method according to any one of [12] to [14], wherein the another film (C) is a resin film that contains one or more resins selected from the group consisting of a polyvinyl acetal resin, a polyester resin, a polycarbonate resin, a (meth)acrylic-based resin, a polyolefin resin, and an ionomer resin as a resin component.
[16] The method according to any one of [1] to [15], wherein the contact is performed by printing or coating.
[17] The method according to any one of [1] to [16], wherein the content of the plasticizer in the liquid plasticizer is 20 to 100% by mass.
[18] The method according to any one of [1] to [17], wherein the polyvinyl acetal resin film before the contact step is laminated with another layer (B).
[19] The method according to [18], wherein the another layer (B) is one or more functional layers (X) selected from the group consisting of a colored layer, a light absorption layer, a light reflection layer, a sound insulating layer, a light scattering layer, a light emitting layer, an electrically conductive layer, a fiber layer, a double-image-preventing layer, and a protective layer.
[20] The method according to any one of [1] to [19], wherein the plasticizer in the liquid plasticizer is a compound in which at least one terminal of an oligoalkylene glycol having a repeating unit of 2 to 10 is bonded to a group having 2 to 14 carbon atoms by an ether bond or ester bond, or an ester compound of an oligocarboxylic acid compound having 2 to 14 carbon atoms with an alcohol compound having 2 to 14 carbon atoms.
[21] The method according to any one of [1] to [20], wherein the polyvinyl acetal resin film has a thickness of 10 to 350 µm.
[22] The method according to any one of [1] to [21], wherein a polyvinyl acetal resin of the polyvinyl acetal resin film is a polyvinyl butyral resin.
[23] The method according to any one of [1] to [22], wherein a viscosity of a solution containing 10% by mass of a polyvinyl acetal resin of the polyvinyl acetal resin film in toluene/ethanol (1/1 mass ratio) measured at 20°C and 30 rpm using a Brookfield viscometer (B type) is 400 mPa·s or less.
[24] The method according to any one of [1] to [23], wherein a viscosity of a solution containing 10% by mass of a polyvinyl acetal resin of the polyvinyl acetal resin film in toluene/ethanol (1/1 mass ratio) measured at 20°C and 30 rpm using a Brookfield viscometer (B type) is more than 200 mPa·s.
[25] The method according to any one of [1] to [24], wherein a polyvinyl acetal resin of the polyvinyl acetal resin film has a molecular weight distribution of 2.7 or more.
[26] The method according to any one of [1] to [25], wherein a liquid plasticizer contact surface of the polyvinyl acetal resin film has a surface roughness Rz of 5 µm or less.
[27] The method according to any one of [1] to [26], wherein the polyvinyl acetal resin film has one or more functions selected from the group consisting of colored, light absorption, light reflection, light scattering, light emission, and electrical conduction.
[28] The method according to any one of [1] to [27], wherein the liquid plasticizer contains a functional material to form one or more functional layers (Y) selected from the group consisting of a colored layer, a light absorption layer, a light reflection layer, a sound insulating layer, a light scattering layer, a light emitting layer, an electrically conductive layer, a fiber layer, and a double-image-preventing layer.
[29] The method according to any one of [1] to [28], wherein, in the heating step, heating is performed at 40°C or higher and 100°C or lower.
[30] A functional layer (A)-attached polyvinyl acetal resin film obtainable by the method according to anyone of [2] to [11] and [13] to [29].
[31] A polyvinyl acetal resin film containing a plasticizer absorbed therein obtainable by the method according to anyone of [1], [11], [16], [17], and [20] to [29].
[32] A film obtainable by providing a laminated film with another film (C) obtainable by the method according to [14] in which the another film (C) is the resin film with the layer having the protective function, and peeling the layer having the protective function from the laminated film.
[33] A polyvinyl acetal resin film containing a plasticizer absorbed therein obtainable by providing a polyvinyl acetal resin film containing a plasticizer absorbed therein obtainable by the method according to [19] in which the polyvinyl acetal resin film before the contact step is laminated with the protective layer as the another layer (B), and peeling the protective layer from the polyvinyl acetal resin film containing the plasticizer absorbed therein.
[34] A functional layer (A)-attached polyvinyl acetal resin film obtainable by providing a functional layer (A)-attached polyvinyl acetal resin film obtainable by the method according to [19] in which the polyvinyl acetal resin film before the contact step is laminated with the protective layer as the another layer (B), and peeling the protective layer from the functional layer (A)-attached polyvinyl acetal resin film.
[35] A functional layer (A)-attached polyvinyl acetal resin film obtainable by providing the functional layer (A)-attached polyvinyl acetal resin film according to [30] in which the functional layer (A) has a protective layer, and peeling the protective layer from the functional layer (A)-attached polyvinyl acetal resin film having the protective layer.
[36] The functional layer (A)-attached polyvinyl acetal resin film according to claim 30 or the polyvinyl acetal resin film containing the plasticizer absorbed therein according to claim 31, wherein a value representing heat creep resistance measured by joining either the functional layer (A)-attached polyvinyl acetal resin film according to [30] or the polyvinyl acetal resin film containing the plasticizer absorbed therein according to [31] and one sheet of plasticized polyvinyl butyral resin film is 10 mm or less, the plasticized polyvinyl butyral resin film having a thickness of 0.76 mm and containing 72% by mass of a polyvinyl butyral resin in which a viscosity-average polymerization degree of polyvinyl alcohol as a raw material is 1700, an acetalization degree is 69 to 71 mol%, and a vinyl acetate unit content is 1 mol% or less and 28% by mass of triethylene glycol-bis-(2-ethylhexanoate).
[37] The functional layer (A)-attached polyvinyl acetal resin film according to claim 30 or the polyvinyl acetal resin film containing the plasticizer absorbed therein according to claim 31, wherein a value representing heat creep resistance measured by placing and joining either the functional layer (A)-attached polyvinyl acetal resin film according to [30] or the polyvinyl acetal resin film containing the plasticizer absorbed therein according to [31] between two sheets of plasticized polyvinyl butyral resin films is 10 mm or less, the plasticized polyvinyl butyral resin films each having a thickness of 0.38 mm and containing 72% by mass of a polyvinyl butyral resin in which a viscosity-average polymerization degree of polyvinyl alcohol as a raw material is 1700, an acetalization degree is 69 to 71 mol%, and a vinyl acetate unit content is 1 mol% or less and 28% by mass of triethylene glycol-bis-(2-ethylhexanoate).
[38] A laminate in which the functional layer (A)-attached polyvinyl acetal resin film according to [30] or the polyvinyl acetal resin film containing the plasticizer absorbed therein according to [31] is sandwiched between two transparent substrates.
[39] The laminate according to [38], wherein the polyvinyl acetal resin film containing the plasticizer absorbed therein is directly in contact with the transparent substrate.
[40] A laminated glass provided with the laminate according to [38] or [39], wherein each of the two transparent substrates is a glass.

### EFFECTS OF THE INVENTION

The present invention can provide a method of easily plasticizing or functionalizing a polyvinyl acetal resin film. Above all, in particular, the present invention can provide (1) a method of laminating a polyvinyl acetal resin film and a functional film or functional layer, (2) a method of imparting a function to a polyvinyl acetal resin film by printing or coating, and (3) a method of plasticizing a polyvinyl acetal resin film with functionalities imparted thereto.

### BRIEF DESCRIPTION OF THE DRAWINGS

Fig. 1 is a schematic diagram of a laminated glass used for measurement of a heat creep resistance value (1).
Fig. 2 is a schematic diagram of a laminated glass used for measurement of a heat creep resistance value (2).
Fig. 3 is a schematic diagram of a laminated glass with an iron plate adhered thereto used for measurement of the heat creep resistance value (1) or the heat creep resistance value (2).
Fig. 4 is a schematic diagram of the laminated glass with the iron plate adhered thereto in a state of being fixed at a predetermined angle in order to measure the heat creep resistance value (1) or the heat creep resistance value (2).
Fig. 5 is a graph showing the swelling degree of a polyvinyl acetal resin film due to absorption of a plasticizer at 50°C.
Fig. 6 is a graph showing the swelling degree of a polyvinyl acetal resin film due to absorption of a plasticizer at room temperature.

### EMBODIMENTS OF THE INVENTION

### [Method for producing polyvinyl acetal resin film containing plasticizer absorbed therein]

The present invention relates to a method for producing a polyvinyl acetal resin film containing a plasticizer absorbed therein. The method comprises a contact step of bringing a liquid plasticizer into contact with a polyvinyl acetal resin film; and a heating step of heating the polyvinyl acetal resin film that has been contacted with the liquid plasticizer, wherein an amount of a plasticizer in the polyvinyl acetal resin film before the contact step is 0 to 20% by mass based on a total mass of the polyvinyl acetal resin film.

### <Resin in polyvinyl acetal resin film>

The polyvinyl acetal resin film according to the present invention contains a polyvinyl acetal resin as the resin component. The content of the polyvinyl acetal resin in the polyvinyl acetal resin film is preferably 50% by mass or more, more preferably 60% by mass or more, still more preferably 70% by mass or more, and particularly preferably 80% by mass or more based on the total mass of the polyvinyl acetal resin film. The upper limit value of the content is not particularly limited. The content is 100% by mass or less based on the total mass of the polyvinyl acetal resin film.

The polyvinyl acetal resin film may have a phase separated structure of multiple components; however, the phase separated structure has an average particle diameter of an island component of preferably less than 100 nm, and more preferably less than 80 nm. Particularly preferably, the polyvinyl acetal resin film does not show a sea-island phase separated structure. Showing no sea-island phase separated structure or having a sufficiently fine particle diameter can lead to transparency usable even for a windshield of automobiles, etc.

The polyvinyl acetal resin contained in the polyvinyl acetal resin film according to the present invention may be one polyvinyl acetal resin or two or more polyvinyl acetal resins in which one or more of the viscosity-average polymerization degree, the acetalization degree, the vinyl acetate unit content, the vinyl alcohol unit content, the ethylene unit content, the molecular weight of an aldehyde used for acetalization, and the chain length are different from each other. When the polyvinyl acetal resin film contains two or more different polyvinyl acetal resins, the polyvinyl acetal resins are preferably a mixture of at least two polyvinyl acetal resins having different viscosity-average polymerization degrees or an acetalization product of a mixture of at least two polyvinyl alcohol-based resins having different viscosity-average polymerization degrees from the viewpoint of easily performing melt molding and easily preventing deformation of a functional layer, another layer (B), or another film (C) in preparation of a laminated glass, shifting of the glass in use of the laminated glass, and the like.

The acetalization degree of the polyvinyl acetal resin used in the present invention is preferably 40 mol% or more, more preferably 45 mol% or more, still more preferably 50 mol% or more, still more preferably 60 mol% or more, and particularly preferably 68 mol% or more, and preferably 86 mol% or less, more preferably 84 mol% or less, and still more preferably 82 mol% or less. The acetalization degree is the amount of unit that forms an acetal on the basis of a repeating unit, the repeating unit being a unit (e.g. vinyl alcohol unit, vinyl acetate unit, ethylene unit) composed of two carbons in the main chain of a polyvinyl alcohol-based resin, which is a production raw material of the polyvinyl acetal resin. It is preferable that the acetalization degree is within the range between the lower limit value and the upper limit value described above, since the obtained polyvinyl acetal resin film tends to have sufficient dynamic strength, and the polyvinyl acetal resin tends to have good compatibility with a plasticizer. When the polyvinyl acetal resin film contains two or more different polyvinyl acetal resins, the acetalization degree of at least one polyvinyl acetal resin is preferably within the range between the lower limit value and the upper limit value described above. The acetalization degree of the polyvinyl acetal resin is preferably 65 mol% or more from the viewpoint of water resistance. The acetalization degree can be adjusted by adjusting the amount of an aldehyde used for the acetalization reaction.

The vinyl acetate unit content of the polyvinyl acetal resin is preferably 0.1 mol% or more, and more preferably 0.3 mol% or more, and preferably 30 mol% or less, more preferably 20 mol% or less, and particularly preferably 0.5 to 3 mol% or 5 to 8 mol%. The vinyl acetate unit content is the amount of vinyl acetate unit on the basis of a repeating unit, the repeating unit being a unit (e.g. vinyl alcohol unit, vinyl acetate unit, ethylene unit) composed of two carbons in the main chain of a polyvinyl alcohol-based resin, which is a production raw material of the polyvinyl acetal resin. The vinyl acetate unit content can affect the polarity of the polyvinyl acetal resin and accordingly change the compatibility of a plasticizer in the polyvinyl acetal resin film or the mechanical strength of the polyvinyl acetal resin film. When the vinyl acetate unit content is within the range between the lower limit value and the upper limit value described above, the polyvinyl acetal resin film tends to achieve good joining with a plasticized polyvinyl acetal resin film (hereinafter, may be referred to as "plasticized polyvinyl acetal resin film" or "plasticized polyvinyl acetal resin layer") containing a polyvinyl acetal resin and a plasticizer as the another layer (B) or the another film (C) described later that may be optionally laminated adjacently and also achieve decreased optical distortion or the like. When the polyvinyl acetal resin film contains two or more different polyvinyl acetal resins, the vinyl acetate unit content of at least one polyvinyl acetal resin is preferably within the above range. The vinyl acetate unit content can be adjusted by appropriately adjusting the saponification degree of the polyvinyl alcohol-based resin as the raw material.

The vinyl alcohol unit content of the polyvinyl acetal resin is preferably 9 to 36 mol%, more preferably 18 to 34 mol%, still more preferably 22 to 34 mol%, still more preferably 26 to 34 mol%, particularly preferably 26 to 31 mol%, and particularly more preferably 26 to 30 mol%. The vinyl alcohol unit content is the amount of vinyl alcohol unit on the basis of a repeating unit, the repeating unit being a unit (e.g. vinyl alcohol unit, vinyl acetate unit, ethylene unit) composed of two carbons in the main chain of a polyvinyl alcohol-based resin, which is a production raw material of the polyvinyl acetal resin. When the vinyl alcohol unit content is within the above range, the refractive index difference between the polyvinyl acetal resin film and the plasticized polyvinyl acetal resin film optionally laminated adjacently tends to be small, leading to a laminated glass with little optical unevenness. In addition, the vinyl alcohol unit content that is preferable to further impart sound insulating performance together is 9 to 29 mol%, more preferably 12 to 26 mol%, still more preferably 15 to 23 mol%, and particularly preferably 16 to 20 mol%. When the polyvinyl acetal resin film contains two or more different polyvinyl acetal resins, the vinyl alcohol unit content of at least one polyvinyl acetal resin is preferably within the above range. The vinyl alcohol unit content can be adjusted within the above range by adjusting the amount of an aldehyde used for the acetalization reaction.

The polyvinyl acetal resin is usually composed of the unit that forms an acetal, the vinyl alcohol unit, and the vinyl acetate unit Each unit amount of these units is, for example, measured by JIS K6728 "Testing methods for polyvinyl butyral" or a nuclear magnetic resonance method (NMR).

The viscosity of a solution containing 10% by mass of the polyvinyl acetal resin in toluene/ethanol (1/1 mass ratio) measured at 20°C and 30 rpm using a Brookfield viscometer (B type) is preferably more than 100 mPa·s. When the viscosity is 100 mPa.s or less, deformation and breakage of the functional layer, the another layer (B), or the another film (C) in preparation of a laminated glass cannot be sufficiently reduced, and shifting of the glass in the obtained laminated glass at high temperature cannot be sufficiently reduced.

When a plasticizer migrates from the plasticized polyvinyl acetal resin film that may be optionally used in preparation of a laminated glass to the polyvinyl acetal resin film, the viscosity described above is preferably 200 mPa·s or more, more preferably more than 200 mPa·s, still more preferably 220 mPa·s or more, particularly preferably 230 mPa·s or more, still more particularly preferably 240 mPa·s or more, and most preferably 265 mPa·s or more. When a plasticizer does not migrate from the plasticized polyvinyl acetal resin film that may be optionally used in preparation of a laminated glass to the polyvinyl acetal resin film, for example, a barrier layer is present therebetween, the viscosity described above is preferably 100 mPa·s or more, more preferably 150 mPa·s or more, still more preferably 180 mPa·s or more, still more preferably 200 mPa·s or more, and particularly preferably 220 mPa·s or more. When the viscosity of the polyvinyl acetal resin is the lower limit value or more, deformation and cracks of the functional layer, the another layer (B), or the another film (C) in preparation of a laminated glass can be easily reduced, and shifting of the glass in the obtained laminated glass at high temperature can be easily prevented.

The viscosity described above is usually 1000 mPa·s or less, preferably 800 mPa·s or less, more preferably 500 mPa·s or less, still more preferably 450 mPa·s or less, and particularly preferably 400 mPa·s or less from the viewpoint of easily obtaining good film-forming properties and easily preparing a laminated glass. When a plasticizer does not migrate from the plasticized polyvinyl acetal resin film that may be optionally used in preparation of a laminated glass to the polyvinyl acetal resin film, the viscosity described above is preferably 450 mPa·s or less, more preferably 400 mPa·s or less, still more preferably 350 mPa·s or less, and particularly preferably 300 mPa·s or less.

The viscosity described above can be adjusted by the use or combined use of a polyvinyl acetal resin produced by using a polyvinyl alcohol-based resin having a high viscosity-average polymerization degree as the raw material or a part of the raw material. When the polyvinyl acetal resin used to constitute the polyvinyl acetal resin film is composed of a mixture of more than one resin, the viscosity described above is the viscosity of such a mixture.

The peak top molecular weight of the polyvinyl acetal resin is preferably 115,000 to 200,000, more preferably 120,000 to 160,000, and particularly preferably 130,000 to 150,000. When the peak top molecular weight of the polyvinyl acetal resin is within the above range, the resin tends to obtain suitable film-forming properties and suitable film physical properties (e.g. lamination suitability, heat creep resistance, and breaking elongation). The peak top molecular weight of the polyvinyl acetal resin can be adjusted within the above range by the use or combined use of a polyvinyl acetal resin produced by using a polyvinyl alcohol-based resin having a high viscosity-average polymerization degree as the raw material or a part of the raw material.

The molecular weight distribution of the polyvinyl acetal resin in the polyvinyl acetal resin film, that is, the ratio (Mw/Mn) of the weight average molecular weight (Mw) to the number average molecular weight (Mn), is preferably 2.0 or more, more preferably 2.2 or more, and particularly preferably 2.4 or more when the polyvinyl acetal resin film contains one polyvinyl acetal resin, and preferably 2.7 or more, more preferably 2.8 or more, and particularly preferably 2.9 or more when the polyvinyl acetal resin film contains two or more polyvinyl acetal resins. When the molecular weight distribution of the polyvinyl acetal resin is the lower limit value or more, the resin tends to achieve a good balance between film-forming properties and suitable film physical properties (e.g. lamination suitability, heat creep resistance, and breaking strength). The molecular weight distribution of the polyvinyl acetal resin can be adjusted to the lower limit value or more by acetalization of a mixture of polyvinyl alcohol-based resins having different viscosity-average polymerization degrees or mixing acetalization products of polyvinyl alcohol-based resins having different viscosity-average polymerization degrees. The upper limit value of the molecular weight distribution is not particularly limited. The molecular weight distribution is usually 10 or less, and preferably 5 or less from the viewpoint of ease of film formation.

When the polyvinyl acetal resin film contains two or more different polyvinyl acetal resins, the peak top molecular weight and the molecular weight distribution of at least one polyvinyl acetal resin are preferably within the above ranges.

The peak top molecular weight and the molecular weight distribution can be determined by using gel permeation chromatography (GPC) with polystyrene standards known in molecular weight.

The polyvinyl acetal resin can be produced by a conventionally publicly-known method, and typically it can be produced by acetalization of a polyvinyl alcohol-based resin (e.g. polyvinyl alcohol resin, ethylenevinyl alcohol copolymer) with an aldehyde. Specifically, for example, a polyvinyl alcohol-based resin is dissolved in warm water, the obtained aqueous solution is kept at a predetermined temperature (for example, 0°C or higher, preferably 10°C or higher, and for example, 90°C or lower, preferably 20°C or lower), and a required acid catalyst and an aldehyde are added, thereby allowing an acetalization reaction to proceed while being stirred. Next, the reaction temperature is increased to about 70°C for aging, thereby completing the reaction. After neutralization, washing with water, and drying, the powder of a polyvinyl acetal resin can be obtained.

The polyvinyl acetal resin used in the present invention is preferably obtainable by reaction of at least one polyvinyl alcohol-based resin and one or more aliphatic non-branched aldehydes having 2 to 10 carbon atoms. As such an aldehyde, n-butyl aldehyde is preferable from the viewpoint of easily obtaining a polyvinyl acetal resin having a suitable breaking energy. The content of n-butyl aldehyde in the aldehyde used for acetalization is preferably 50% by mass or more, more preferably 80% by mass or more, still more preferably 95% by mass or more, and particularly preferably 99% by mass or more, and may be 100% by mass.

Accordingly, in a preferable embodiment according to the present invention, the polyvinyl acetal resin is a polyvinyl butyral resin. As the polyvinyl butyral resin, a modified polyvinyl butyral resin obtainable by butyralization of a polyvinyl alcohol-based polymer with butyl aldehyde, the polyvinyl alcohol-based polymer being obtainable by saponification of a copolymer of a vinyl ester and other monomer, may be used. Examples of the other monomer described above include ethylene and propylene. As the other monomer described above, a monomer having a hydroxyl group, a carboxyl group, or a carboxylate group may be used.

The polyvinyl alcohol-based resin used for production of the polyvinyl acetal resin may be a single polyvinyl alcohol-based resin or a mixture of polyvinyl alcohol-based resins having different viscosity-average polymerization degrees, hydrolysis degrees, or the like.

The viscosity-average polymerization degree of the polyvinyl alcohol-based resin as the raw material of the polyvinyl acetal resin is preferably 100 or more, more preferably 300 or more, still more preferably 400 or more, still more preferably 600 or more, particularly preferably 700 or more, and particularly more preferably 750 or more. When the viscosity-average polymerization degree of the polyvinyl alcohol-based resin is the lower limit value or more, deformation and disconnection of the functional layer, the another layer (B), or the another film (C) in preparation of a laminated glass can be easily reduced, and the phenomenon of shifting of the glass caused by heat in the obtained laminated glass can be easily prevented The viscosity-average polymerization degree of the polyvinyl alcohol-based resin is preferably 5000 or less, more preferably 3000 or less, still more preferably 2500 or less, particularly preferably 2300 or less, and particularly more preferably 2000 or less. When the viscosity-average polymerization degree of the polyvinyl alcohol-based resin is the upper limit value or less, the resin tends to obtain good film-forming properties.

The preferable value of the viscosity-average polymerization degree of the polyvinyl acetal resin is the same as the preferable value of the viscosity-average polymerization degree of the polyvinyl alcohol-based resin described above. When the polyvinyl acetal resin film contains two or more different polyvinyl acetal resins, the viscosity-average polymerization degree of at least one polyvinyl acetal resin is preferably the lower limit value or more and the upper limit value or less.

To set the vinyl acetate unit of the obtained polyvinyl acetal resin to preferably 30 mol% or less, a polyvinyl alcohol-based resin having a saponification degree of 70 mol% or more is preferably used. When the saponification degree of the polyvinyl alcohol-based resin is the lower limit value or more, transparency or heat resistance of the resin tends to be superior, and a reaction with an aldehyde is good. The saponification degree is more preferably 95 mol% or more.

The viscosity-average polymerization degree and the saponification degree of the polyvinyl alcohol-based resin can be measured based on JIS K 6726 "Testing methods for polyvinyl alcohol".

The polyvinyl acetal resin film preferably contains uncrosslinked polyvinyl acetal from the viewpoint of easily obtaining good film-forming properties. The polyvinyl acetal resin film can contain crosslinked polyvinyl acetal. Methods for crosslinking polyvinyl acetal are, for examples, described in EP-B1-1527107 and WO-A1-2004/063231 (thermal self-crosslinking of carboxyl group-containing polyvinyl acetal), EP-A1-1606325 (polyvinyl acetal crosslinked with polyaldehyde), and WO-A1-2003/020776 (polyvinyl acetal crosslinked with glyoxylic acid). It is also a useful method to control the amount of intermolecular acetal bonds produced or to control the blocking degree of residual hydroxyl groups by appropriately adjusting the acetalization reaction conditions.

The thickness of the polyvinyl acetal resin film according to the present invention is preferably 10 µm or more, more preferably 20 µm or more, and particularly preferably 30 µm or more, and preferably 350 µm or less, more preferably 330 µm or less, still more preferably 295 µm or less, still more preferably 270 µm or less, particularly preferably 250 µm or less, particularly still more preferably 150 µm or less, particularly still more preferably 120 µm or less, and most preferably less than 100 µm. In a preferable embodiment, the thickness of the polyvinyl acetal resin film according to the present invention is 10 to 350 µm. When the thickness of the polyvinyl acetal resin film is the lower limit value or more, problems such as distortion in the functional layer, the another layer (B), or the another film (C) resulting from shrinkage or deformation of the polyvinyl acetal resin film hardly occur, and good film-forming properties can be easily obtained. Further, when the thickness of the polyvinyl acetal resin film is the upper limit value or less or less than the upper limit value, the problem of having reduced impact resistance hardly occurs, that is, when the polyvinyl acetal resin film is used for a glass for vehicles, the problem of having a reduced impact resistance in the glass for vehicles, which is resulting from the migration amount of a plasticizer from the plasticized polyvinyl acetal resin film optionally laminated to the polyvinyl acetal resin film becoming large, and accordingly the amount of the plasticizer in the plasticized polyvinyl acetal resin film becoming small, hardly occurs. The thickness of the polyvinyl acetal resin film may be measured by using a thickness meter, laser microscope, or the like.

### <Plasticizer>

In the present invention, an amount of a plasticizer in the polyvinyl acetal resin film before the contact step is 0 to 20% by mass based on a total mass of the polyvinyl acetal resin film. When the amount of the plasticizer exceeds 20% by mass, it is difficult to form the polyvinyl acetal resin film and difficult to keep a low shrinkage rate of the polyvinyl acetal resin film especially during heating, which tends to result in the occurrence of deformation and/or cracks in the functional layer at the time of forming the functional layer.

The amount of the plasticizer is preferably 0 to 19% by mass, more preferably 0 to 15% by mass, still more preferably 0 to 10% by mass, and particularly preferably 0 to 5% by mass, and it is preferably 20 parts by mass or less, more preferably 0 to 19 parts by mass, still more preferably 0 to 15 parts by mass, particularly preferably 0 to 10 parts by mass, and most preferably 0 to 5 parts by mass based on 100 parts by mass of the polyvinyl acetal resin. When the amount of the plasticizer in the polyvinyl acetal resin film is within the above range, the polyvinyl acetal resin film superior in film-forming properties and handling properties can be easily produced, and deformation and cracks of the functional layer in preparation of a laminated glass using the polyvinyl acetal resin film can be easily reduced.

When the polyvinyl acetal resin film contains a plasticizer, preferably one or more compounds selected from the following group are used as the plasticizer.
- Esters of polyvalent aliphatic or aromatic acids. Examples include dialkyl adipates (e.g. dihexyl adipate, di-2-ethylbutyl adipate, dioctyl adipate, di-2-ethylhexyl adipate, hexyl cyclohexyl adipate, diheptyl adipate, dinonyl adipate, diisononyl adipate, heptyl nonyl adipate); esters of adipic acid with alcohols or alcohols including ether compounds [e.g. di(butoxyethyl) adipate, di(butoxyethoxyethyl) adipate]; dialkyl sebacates (e.g. dibutyl sebacate); esters of sebacic acid with alicyclic alcohols or alcohols including ether compounds; esters of phthalic acid (e.g. butylbenzyl phthalate, bis-2-butoxyethyl phthalate); and esters of alicyclic polycarboxylic acids with aliphatic alcohols (e.g. 1,2-cyclohexane dicarboxylic acid diisononyl ester).
- Esters or ethers of polyhydric aliphatic or aromatic alcohols or oligoether glycol having one or more aliphatic or aromatic substituents. Examples include esters of glycerin, diglycol, triglycol, tetraglycol, or the like with a linear or branched aliphatic or alicyclic carboxylic acid, and further include a compound in which at least one terminal of an oligoalkylene glycol having a repeating unit of 2 to 10 is bonded to a group having 2 to 14 carbon atoms by an ether bond or ester bond, and an ester compound of an oligocarboxylic acid compound having 2 to 14 carbon atoms with an alcohol compound having 2 to 14 carbon atoms that may contain an ether bond. Specifically, examples include diethylene glycol-bis-(2-ethylhexanoate), triethylene glycol-bis-(2-ethylhexanoate) (hereinafter, maybe referred to as "3GO"), triethylene glycol-bis-(2-ethylbutanoate), tetraethylene glycol-bis-(2-ethylhexanoate), tetraethylene glycol-bis-n-heptanoate, triethylene glycol-bis-n-heptanoate, triethylene glycol-bis-n-hexanoate, tetraethylene glycol dimethyl ether, and dipropylene glycol dibenzoate.
- Phosphoric acid esters of aliphatic or aromatic alcohols. Examples include tris(2-ethylhexyl) phosphate, triethyl phosphate, diphenyl-2-ethylhexyl phosphate, and tricresyl phosphate.
- Esters of citric acid, succinic acid and/or fumaric acid.

In addition, as the plasticizer, polyesters or oligoesters composed of a polyhydric alcohol and a polycarboxylic acid, terminal esterified products or etherified products thereof, polyesters or oligoesters composed of a lactone or a hydroxycarboxylic acid, or terminal esterified products or etherified products thereof may be used.

When the polyvinyl acetal resin film contains a plasticizer, from the viewpoint of easily reducing the problems (for example, problems such as change in physical properties over time) associated with the migration of the plasticizer between the polyvinyl acetal resin film and the plasticized polyvinyl acetal resin film optionally laminated, it is preferable to use a plasticizer that is the same as that contained in the plasticized polyvinyl acetal resin film to be laminated, or a plasticizer that does not impair the physical properties (e.g. heat resistance, light resistance, transparency, plasticizing effect) of the plasticized polyvinyl acetal resin film. From this point of view, as the plasticizer, a compound in which at least one terminal of an oligoalkylene glycol having a repeating unit of2 to 10 is bonded to a group having 2 to 14 carbon atoms by an ether bond or ester bond, and an ester compound of an oligocarboxylic acid compound having 2 to 14 carbon atoms with an alcohol compound having 2 to 14 carbon atoms that may contain an ether bond are preferable. Among these, triethylene glycol-bis-(2-ethylhexanoate), triethylene glycol-bis-(2-ethylbutanoate), tetraethylene glycol-bis-(2-ethylhexanoate), and tetraethylene glycol-bis-n-heptanoate are more preferable, and triethylene glycol-bis-(2-ethylhexanoate) is particularly preferable.

### <Additives>

The polyvinyl acetal resin film may contain other additives. Examples of such additives include water, ultraviolet absorbers, antioxidants, adhesion regulators, brighteners/fluorescent brighteners, stabilizers, coloring matters, processing aids, impact resistance improvers, fluidity improvers, crosslinking agents, pigments, light emitting materials, refractive index regulators, thermally insulating materials, organic or inorganic nanoparticles, calcined silicate, and surface active agents.

In an embodiment according to the present invention, the polyvinyl acetal resin film may contain an alkali metal salt and/or an alkaline earth metal salt as the adhesion regulator. Specifically, it is preferable to contain a salt composed of one or more metals selected from the group consisting of sodium, potassium, magnesium, and calcium and at least one carboxylic acid having 2 to 12 carbon atoms. The total mass of alkali metal atoms and alkaline earth metal atoms contained in the adhesion regulator to be added is preferably 10 ppm or more, more preferably 30 ppm or more, still more preferably 50 ppm or more, and particularly preferably 70 ppm or more, and preferably 1500 ppm or less, more preferably 1000 ppm or less, still more preferably 500 ppm or less, and particularly preferably 300 ppm or less based on the total mass of the polyvinyl acetal resin film before the contact step. When it is the lower limit value or more, the polyvinyl acetal resin film tends to have unexcessive adhesive strength to a glass and sufficient penetration resistance. When it is the upper limit value or less, a tendency that the polyvinyl acetal resin film absorbs water and whitens or peels away from a glass can be easily decreased The amount of the alkali metal salt based on the total mass of the alkali metal salt and the alkaline earth metal salt to be added is preferably 70% by mass or less, more preferably 50% by mass or less, and more preferably 30% by mass or less, and preferably 5% by mass or more, more preferably 10% by mass or more, and still more preferably 15% by mass or more. When the ratio of the alkali metal salt is the upper limit value or less, a tendency that the polyvinyl acetal resin film absorbs water and whitens or peels away from a glass can be easily reduced. When the ratio of the alkali metal salt is the lower limit value or more, a tendency that the polyvinyl acetal resin film has a low impact resistance can be easily reduced.

In a preferable embodiment of the present invention, the polyvinyl acetal resin film before the contact step has one or more functions selected from the group consisting of colored, light absorption, light reflection, light scattering, light emission, and electrical conduction. In this embodiment, even when the polyvinyl acetal resin film is not laminated with the another layer (B), the functional layer and/or the another film (C) described later, the polyvinyl acetal resin film itself can have one or more functions.

The polyvinyl acetal resin film before the contact step may be a single layer of a polyvinyl acetal resin film having a plasticizer in an amount of 0 to 20% by mass, or may be the polyvinyl acetal resin film described above laminated with the another layer (B). In the present invention, a layer or film that is previously laminated with the polyvinyl acetal resin film before the contact step of the liquid plasticizer is referred to as another layer (B).

### <Another layer (B)>

In a preferable embodiment, the another layer (B) is one or more functional layers (X) selected from the group consisting of a colored layer, a light absorption layer, a light reflection layer, a sound insulating layer, a light scattering layer, a light emitting layer, an electrically conductive layer, a fiber layer, a double-image-preventing layer, and a protective layer.

In another preferable embodiment, the another layer (B) is a layer that contains one or more resins selected from the group consisting of a polyvinyl acetal resin, a polyester resin, a polycarbonate resin, a (meth)acrylic-based resin, a polyolefin resin, and an ionomer resin as the resin component, and preferably a layer that contains a polyvinyl acetal resin or polyethylene terephthalate (hereinafter, referred to as "PET") as the resin component For example, the another layer (B) may be a PET layer that may have a layer having any function (e.g. infrared reflection function) or a plasticized polyvinyl acetal resin layer that may have any function (e.g. coloring properties, light absorption properties, sound insulating properties and/or double-image-preventing properties). As the polyvinyl acetal resin in this embodiment, the polyvinyl acetal resin described in the paragraph of <Resin in polyvinyl acetal resin film> above may be used in the same manner, and the preferable embodiments, production methods, and the like described in the paragraph of <Resin in polyvinyl acetal resin film> may be applied to this embodiment in the same manner.

### <<Plasticized polyvinyl acetal resin layer >>

The plasticized polyvinyl acetal resin layer contains the polyvinyl acetal resin layer and the plasticizer. As the polyvinyl acetal resin or the plasticizer contained in the plasticized polyvinyl acetal resin layer, those described in the paragraph of <Resin in polyvinyl acetal resin film> or the paragraph of <Plasticizer> above may be used, and the preferable embodiments, production methods, and the like described in the paragraph of <Resin in polyvinyl acetal resin film> or the paragraph of <Plasticizer> may be applied to this embodiment in the same manner.

The content of the polyvinyl acetal resin in the plasticized polyvinyl acetal resin layer is not particularly limited, and preferably 84.0% by mass or less, and more preferably 60.0 to 83.9% by mass based on the total mass of the plasticized polyvinyl acetal resin layer in the initial state before lamination with the polyvinyl acetal resin film before the contact step according to the present invention.

The amount of the plasticizer in the plasticized polyvinyl acetal resin layer is preferably 16.0% by mass or more, more preferably 16.1% by mass or more, still more preferably more than 20.0% by mass, still more preferably 22.0% by mass or more, and particularly preferably 26.0% by mass or more, and preferably 36.0% by mass or less, more preferably 32.0% by mass or less, and particularly preferably 30.0% by mass or less based on the total mass of the plasticized polyvinyl acetal resin layer in the initial state before lamination with the polyvinyl acetal resin film before the contact step according to the present invention. When the content of the plasticizer is within the range between the lower limit value and the upper limit value described above, a laminated glass superior in impact resistance can be easily obtained. As the plasticized polyvinyl acetal resin layer, a plasticized polyvinyl acetal resin layer having sound-insulating properties may also be used. In this case, the content of the plasticizer is preferably 30% by mass or more, more preferably 30 to 50% by mass, still more preferably 31 to 45% by mass, and particularly preferably 32 to 42% by mass based on the total mass of the plasticized polyvinyl acetal resin layer in the initial state.

The plasticized polyvinyl acetal resin layer may contain, in addition to the polyvinyl acetal resin and the plasticizer, the additives described in the paragraph of <Additives> above as needed. Note that the total amount of the polyvinyl acetal resin and the plasticizer in the plasticized polyvinyl acetal resin layer is preferably 90% by mass or more.

The plasticized polyvinyl acetal resin layer may have a wedge cross section shape in which one end face side is thick and the other end face side is thin. In this case, the cross section shape may be the shape in which the entire shape is a wedge shape such that the cross section becomes thinner gradually from one end face side to the other end face side. Alternatively, the cross section shape may be the shape in which a part of the cross section is a wedge shape such that the same thickness holds from one end face to a freely-selected position between the one end face to the other end face, and the cross section becomes thinner gradually from the freely-selected position to the other end face. The plasticized polyvinyl acetal resin layer may have any cross section shape regardless of positions as long as it does not cause problems for production. Such a layer that changes in cross section thickness may be employed in all layers or only a part of layers. With the plasticized polyvinyl acetal resin layer having such a cross section shape, the laminate according to the present invention can have the thickness profile of a wedge shape even if the film or layer other than the plasticized polyvinyl acetal resin layer has the thickness profile of a parallel plane, so that it can be used for a head-up display (HUD) in an automobile windshield.

The plasticized polyvinyl acetal resin layer may have functions of more than one functional layer (X) in combination. That is, the plasticized polyvinyl acetal resin layer may have one or more functions selected from the group consisting of a colored region, a light absorption function, a light reflection function, a sound insulating function, a light scattering function, a light emitting function, an electrical conductive function, fibers, a double-image-preventing function (wedge shape cross section structure), and a protective function.

The plasticized polyvinyl acetal resin layer may be a commercially available plasticized polyvinyl acetal resin sheet.

The another layer (B) may be one layer or plural layers. The another layer (B) may be laminated on the entire surface or a part of the surface of the polyvinyl acetal resin film before the contact step. In the present invention, since at least one surface of the polyvinyl acetal resin film before the contact step corresponds to the surface that is to be contacted with the liquid plasticizer, when the entire surface of the polyvinyl acetal resin film before the contact step is laminated with the another layer (B), only one surface (the surface opposite to the liquid plasticizer contact surface) of the polyvinyl acetal resin film needs to be laminated with the another layer (B).

The thickness of one layer of the another layer (B) is preferably 10 to 300 µm, more preferably 20 to 150 µm, and particularly preferably 30 to 80 µm. When the another layer (B) has plural layers, the entire thickness of the another layer (B) is preferably 10 to 300 µm, more preferably 20 to 150 µm, and particularly preferably 30 to 80 µm. When the thickness of one layer of the another layer (B) or the entire thickness of the another layer (B) is within the above range, the another layer (B) tends to achieve a good balance between exhibition of the function and a reduced weight The thickness of the another layer (B) may be measured by using a thickness meter, laser microscope, or the like.

### <Method for producing polyvinyl acetal resin film>

A method for producing the polyvinyl acetal resin film is not particularly limited. The polyvinyl acetal resin layer (A) may be produced by blending the polyvinyl acetal resin described above, optionally a predetermined amount of the plasticizer, and other additives as needed, uniformly kneading the mixture, and then using a publicly-known film-forming method such as an extrusion method, a calender method, a pressing method, a casting method, and an inflation method.

Among the publicly-known film-forming methods, a method for producing a film using an extruder is particularly suitably employed. The resin temperature during extrusion is preferably 150 to 250°C, and more preferably 170 to 230°C. When the resin temperature is too high, the polyvinyl acetal resin undergoes decomposition, and the content of volatile substances increases. When the resin temperature is too low, the content of volatile substances increases as well. To efficiently remove volatile substances, volatile substances may be removed from a vent port of an extruder at reduced pressure.

When the polyvinyl acetal resin film before the contact step is laminated with the another layer (B), the polyvinyl acetal resin film and the another layer (B) prepared individually may be laminated by a publicly-known lamination method. When the another layer (B) has plural layers, on the polyvinyl acetal resin film before the contact step, the plural layers may be laminated one by one, the another layer (B) of the plural layers prepared individually may be laminated at one operation, or a combined use of these techniques may be employed for lamination. Examples of such a publicly-known lamination method include a method of coating, printing, or laminating the material constituting the another layer (B) on the polyvinyl acetal resin film before the contact step and a method of coating, printing, or laminating the material constituting the polyvinyl acetal resin film on the another layer (B).

The method of coating, printing, or laminating one constituent material [the material constituting the another layer (B) or the material constituting the polyvinyl acetal resin film] on the other film or layer [polyvinyl acetal resin film or another layer (B)] described above is not particularly limited.

Examples of the coating method include a method of coating a melted product of one constituent material on the other film or layer (for example, a method of melt-extruding one constituent material on the other film or layer or a method of coating one constituent material on the other film or layer by knife coating or the like); a method of imparting the another layer (B) on the polyvinyl acetal resin film by vapor deposition, sputtering, or electro-deposition; when the another layer (B) is composed of a material that can be melt-extruded, a method of coextruding the material constituting the polyvinyl acetal resin film and the material constituting the another layer (B); and a method of dipping the polyvinyl acetal resin film in a solution or dispersion liquid of the material constituting the another layer (B).

Examples of the printing method include screen printing, flexographic printing, and gravure printing. As an ink used in the printing, an ink that is dried or cured by heat or light before laminating the printed polyvinyl acetal resin film in the subsequent step may be used.

Example of the lamination method include a method of stacking and thermocompression-bonding the another layer (B) and the polyvinyl acetal resin film; and a method of joining the another layer (B) and the polyvinyl acetal resin film with an adhesive agent The adhesive agents used in the method of joining with an adhesive agent may be generally-used adhesive agents in the technical field, and examples include acrylate-based adhesive agents, urethane-based adhesive agents, epoxy-based adhesive agents, and hot-melt adhesive agents. In the embodiment in which superior optical characteristics are required, the refractive index difference between the polyvinyl acetal resin film and the adhesive agent is preferably less than 0.01, more preferably 0.005 or less, and still more preferably 0.003 or less, and a method of joining the another layer (B) and the polyvinyl acetal resin film without using an adhesive agent is most preferable from the viewpoint of less likely or not to cause haze derived from the adhesive agent That is, it is preferable not to have an adhesive layer having a refractive index difference between the adhesive layer and the polyvinyl acetal resin film of 0.01 or more, more preferable not to have an adhesive layer having a refractive index difference described above of more than 0.005, and still more preferable not to have an adhesive layer having a refractive index difference described above of more than 0.003 between the polyvinyl acetal resin film and the another layer (B) such as an electrically conductive layer, and it is particularly preferable not to have an adhesive layer between the polyvinyl acetal resin film and the another layer (B). The refractive index may be evaluated by using an Abbe refractometer.

When the another layer (B) is an electrically conductive layer, the electrically conductive layer is preferably formed by printing, and an ink used in printing contains electroconductive particles and/or electroconductive fibers. The electroconductive particles or electroconductive fibers are not particularly limited. Examples include metal particles (including those in a nanowire form) (e.g. gold, silver, copper, zinc, iron or aluminum particles); metal-coated particles or fibers (e.g. silver-plated glass fibers or glass spheres); particles or fibers of electroconductive carbon black, carbon nanotubes, graphite, and graphene. Further, the electroconductive particles may be semiconductor particles such as electroconductive metal oxide particles, for example, particles of indium-doped tin oxide, indium-doped zinc oxide, and antimony-doped tin oxide. The ink preferably contains silver particles, copper particles and/or carbon nanotubes, and more preferably contains silver particles or copper particles from the viewpoint of an electroconductive property.

When the electrically conductive layer is based on a metal foil, the polyvinyl acetal resin film before the contact step laminated with the another layer (B) may be produced by, for example, a method comprising a step of joining a metal foil and the polyvinyl acetal resin film and a step of forming an electrically conductive layer from the metal foil-attached polyvinyl acetal resin film obtained in the step described above.

### <Contact step>

The method according to the present invention comprises a contact step of bringing the liquid plasticizer into contact with the polyvinyl acetal resin film. The method of bring the liquid plasticizer into contact with the polyvinyl acetal resin film is not particularly limited, and examples include the following methods (I) to (V).
(I) A method of coating the liquid plasticizer onto the entire surface or a part of the polyvinyl acetal resin film [for example, a method of using a die coater (e.g. slot die coater), lip coater, gravure coater, comma coater, reverse coater, roll coater, or knife coater, or a method of spray coating], (II) a method of printing a specific pattern on the polyvinyl acetal resin film with the liquid plasticizer [e.g. screen printing, gravure printing, relief printing, inkjet printing, offset printing, flexographic printing, or letterpress printing], (III) a method of dipping the polyvinyl acetal resin film in the liquid plasticizer,(TV) a method of bringing the liquid plasticizer into contact with the entire surface or a part of a functional layer (A) described later in the same manner as in (I) to (III), and then overlapping the liquid plasticizer contact surface of the functional layer (A) and the polyvinyl acetal resin film, and (V) a method of injecting the liquid plasticizer between the polyvinyl acetal resin film and the functional layer (A) described later.

In a preferable embodiment, the contact according to the present invention is performed by printing or coating.

In the contact step, the liquid plasticizer is brought into contact with the polyvinyl acetal resin film in an amount of preferably more than 0 part by mass and 50 parts by mass or less, more preferably 0.001 part by mass or more and 30 parts by mass or less, and particularly preferably 0.1 part by mass or more and 20 parts by mass or less based on 100 parts by mass of the polyvinyl acetal resin film. When the amount of the liquid plasticizer brought into contact with the polyvinyl acetal resin film is within the above range, the polyvinyl acetal resin film tends to obtain a sufficient plasticizing effect

In particular, in the contact step, when the contact is performed by printing, the liquid plasticizer is brought into contact with the polyvinyl acetal resin film in an amount of preferably more than 0 part by mass and 20 parts by mass or less, more preferably 0.001 part by mass or more and 10 parts by mass or less, and particularly preferably 0.1 part by mass or more and 8 parts by mass or less based on 100 parts by mass of the polyvinyl acetal resin film.

In the contact step, when the contact is performed by coating, the liquid plasticizer is brought into contact with the polyvinyl acetal resin film in an amount of preferably more than 0.1 part by mass and 50 parts by mass or less, more preferably 0.5 part by mass or more and 30 parts by mass or less, and particularly preferably 1 part by mass or more and 20 parts by mass or less based on 100 parts by mass of the polyvinyl acetal resin film.

### <Liquid plasticizer>

The "liquid plasticizer" in the present invention means a plasticizer itself, a solution containing a plasticizer, or a dispersion containing a plasticizer.

The liquid plasticizer of the polyvinyl acetal resin only needs to be those capable of being absorbed in the polyvinyl acetal resin film and accordingly reducing the glass transition temperature of the polyvinyl acetal resin film, and preferably those that do not foam in the conditions of preparing a laminated glass. Specifically, the boiling point of the liquid plasticizer at ambient pressure is preferably higher than that of water, that is, higher than 100°C, more preferably 150°C or higher, and particularly preferably 200°C or higher. Furthermore, from the viewpoint of not foaming at reduced pressure in prelamination, the boiling point of the liquid plasticizer at 2 × 10⁴ Pa is preferably 150°C or higher, more preferably 170°C or higher, and particularly preferably 200°C or higher.

Examples of the plasticizer used in the liquid plasticizer include those exemplified as the plasticizer that may be contained in the polyvinyl acetal resin film described above. Among the plasticizers, those in which the ester group has undergone hydrolysis or alcoholysis may be used. From the viewpoint of being easily absorbed in the polyvinyl acetal resin film and easily exhibiting a sufficient plasticizing effect and the viewpoint of being able to be used as a liquid plasticizer that does not contain a solvent or a dispersion medium, the plasticizer is preferably a compound in which at least one terminal of an oligoalkylene glycol having a repeating unit of 2 to 10 is bonded to a group having 2 to 14 carbon atoms by an ether bond or ester bond, or an ester compound of an oligocarboxylic acid compound having 2 to 14 carbon atoms with an alcohol compound having 2 to 14 carbon atoms that may contain an ether bond Among these, triethylene glycol-bis-(2-ethylhexanoate), triethylene glycol-bis-(2-ethylbutanoate), tetraethylene glycol-bis-(2-ethylhexanoate), and tetraethylene glycol-bis-n-heptanoate are more preferable, and triethylene glycol-bis-(2-ethylhexanoate) is particularly preferable. These plasticizers may be used singly, or more than one of them may be used in combination from the viewpoint of solubility to a solvent or dispersibility to a dispersion medium.

Examples of the solvent or dispersion medium other than the plasticizer used in the liquid plasticizer include alcohols such as ethanol, propanol, isopropyl alcohol, butanol, isobutanol, tert-butyl alcohol, ethylene glycol, ethylene glycol monoethyl ether, propylene glycol monomethyl ether, and methylcyclohexanol; ester compounds such as ethyl acetate, propyl acetate, and butyl acetate; ketones such as methyl ethyl ketone, methyl isobutyl ketone, and methylcyclohexanone; aromatic compounds such as toluene and xylene; alicyclic compounds such as cyclohexane and tetralin; and petroleum-based mixed solvents such as mineral spirit and coal tar naphtha. The solvents or dispersion mediums may be used singly or in mixture.

The liquid plasticizer may contain other additives. Examples of the other additives include viscosity regulators, dispersants, and surfactants. Examples of specific materials of the other additives include a polyvinyl acetal resin.

The content of the plasticizer in the liquid plasticizer is preferably 20% by mass or more, more preferably 50% by mass or more, still more preferably 80% by mass or more, and particularly preferably 90% by mass or more from the viewpoint of easily obtaining an intermediate film or laminated glass that has less deterioration in weather resistance or dynamic properties with reduced foaming. The embodiment in which the content described above is 100% by mass, that is, the liquid plasticizer does not contain the solvent, the dispersion medium, and the other additives is one of particularly preferable embodiments since the problems associated with the solvent, the dispersion medium, or the other additives (for example, foaming resulting from the residue of the solvent or the dispersion medium) do not occur. Accordingly, in a preferable embodiment according to the present invention, the content of the plasticizer in the liquid plasticizer is 20 to 100% by mass.

In a preferable embodiment, the liquid plasticizer contains a functional material to form one or more functional layers (Y) selected from the group consisting of a colored layer, a light absorption layer, a light reflection layer, a sound insulating layer, a light scattering layer, a light emitting layer, an electrically conductive layer, a fiber layer, and a double-image-preventing layer. In this embodiment, after the liquid plasticizer is absorbed in the polyvinyl acetal resin film, the functional layer (Y) is formed on the polyvinyl acetal resin film.

### <Heating step>

The method according to the present invention comprises a heating step of heating the polyvinyl acetal resin film that has been contacted with the liquid plasticizer. When the liquid plasticizer contains a low-boiling solvent or dispersion medium, a drying step may be provided before the heating step. The heating step enables at least a part of the liquid plasticizer brought into contact with the polyvinyl acetal resin film to be satisfactorily absorbed in the polyvinyl acetal resin film. The ratio of the plasticizer absorbed by heating is not particularly limited as long as it is within the range of not causing problems such as generation of a dirty film due to the liquid plasticizer in the subsequent steps. The plasticizer only needs to be absorbed to such an extent that the liquid plasticizer does not migrate to a drug packing paper when the drug packing paper is placed on the liquid plasticizer contact surface and held lightly by a hand for 5 seconds. Specifically, the mass increase ratio of the polyvinyl acetal resin film after removing the liquid plasticizer left on the polyvinyl acetal resin film is preferably 30% by mass or more, more preferably 50% by mass or more, still more preferably 70% by mass or more, and particularly preferably 80% by mass or more of the mass of the liquid plasticizer brought into contact with the polyvinyl acetal resin film. The heating step may be performed such that the polyvinyl acetal resin film that has been contacted with the liquid plasticizer and the functional layer (A) are adequately joined together so as not to shift from each other. Specifically, when a test piece composed of the polyvinyl acetal resin film that has been contacted with the liquid plasticizer and the functional layer (A) is subjected to a T-peel test, the heating step may be performed until the test piece exhibits a maximum peel strength of preferably 2 N/cm or more, more preferably 3 N/cm or more, still more preferably 5 N/cm or more, and particularly preferably 10 N/cm or more.

A heating method of heating the polyvinyl acetal resin film that has been contacted with the liquid plasticizer is not particularly limited, and examples include a method of charging it in a heating furnace or a heating chamber for a predetermined time period; a method of allowing it to pass through a heating furnace or a heating chamber for a predetermined time period; a method of heating it with a heater such as an infrared heater, and a method of blowing gaseous matter such as heated air to it These methods may be employed singly or in combination.

The heating temperature is also not particularly limited, and preferably 40°C or higher, more preferably 50°C or higher, and still more preferably higher than 50°C, and preferably 100°C or lower, more preferably 80°C or lower, and still more preferably 70°C or lower. When the heating temperature is within the range between the lower limit value and the upper limit value, the plasticizer tends to be sufficiently absorbed in the polyvinyl acetal resin film within an appropriate time period, the polyvinyl acetal resin film can be easily prevented from deformation due to heat shrinkage, and accordingly good joining can be easily achieved between the polyvinyl acetal resin film that has been contacted with the liquid plasticizer and the functional layer (A). In a preferable embodiment according to the present invention, the polyvinyl acetal resin film that has been contacted with the liquid plasticizer is heated at 40°C or higher and 100°C or lower in the heating step.

### <Lamination step of polyvinyl acetal resin film containing plasticizer absorbed therein and another film (C)>

The present invention also relates to a method for producing a laminated film of the polyvinyl acetal resin film containing the plasticizer absorbed therein obtainable by the production method according to the present invention and another film (C), comprising a lamination step of laminating the polyvinyl acetal resin film containing the plasticizer absorbed therein and another film (C). In the present invention, all layers or films other than the functional layer (A) described later and the another layer (B) described above are referred to as another films (C). Therefore, the another film (C) is laminated on the surface opposite to the liquid plasticizer contact surface of the polyvinyl acetal resin film that has been contacted with the liquid plasticizer, or laminated in contact with the another layer (B) when the polyvinyl acetal resin film is laminated with the another layer (B).

The polyvinyl acetal resin film may be laminated with the another film (C) by using a publicly-known lamination method. As such a lamination method, the publicly-known lamination method (e.g. coating, printing, or lamination method) of the polyvinyl acetal resin film before the contact step with the another layer (B) described above may be employed. The lamination of the polyvinyl acetal resin film containing the plasticizer absorbed therein and the another film (C) is preferably performed by lamination, and more preferably a method of stacking and thermocompression bonding the polyvinyl acetal resin film containing the plasticizer absorbed therein [optionally laminated with the another layer (B)] and the another film (C) from the viewpoint of easily obtaining a film superior in transparency. In the same manner as in the another layer (B), the another film (C) is laminated on the entire surface or a part of the polyvinyl acetal resin film containing the plasticizer absorbed therein, or laminated on the entire surface or a part of the another layer (B) when the polyvinyl acetal resin film is laminated with the another layer (B).

In a preferable embodiment, the another film (C) is a resin film with one or more layers each having any function of a coloring function, a sound insulating function, a thermally insulating function, a light emitting function, a protective function, an electrical conductive function, or a double-image-preventing function.

In another preferable embodiment, the another film (C) is a resin film that contains one or more resins selected from the group consisting of a polyvinyl acetal resin, a polyester resin, a polycarbonate resin, a (meth)acrylic-based resin, a polyolefin resin, and an ionomer resin as the resin component.

In another preferable embodiment, the another film (C) may be a plasticized polyvinyl acetal resin film that may have any function (e.g. coloring properties, light absorption properties, sound insulating properties, and/or double-image-preventing properties). As the plasticized polyvinyl acetal resin film in this embodiment, those described in the paragraph of <<Plasficized polyvinyl acetal resin layer>> above may be used, and the preferable embodiments, production methods, and the like described in the paragraph of <<Plasticized polyvinyl acetal resin layer>> may be applied to this embodiment in the same manner.

The another film (C) may be a single layer or plural layers. The thickness of one layer of the another film (C) is preferably 10 to 2000 µm, more preferably 20 to 1000 µm, and particularly preferably 30 to 800 µm. The entire thickness of the another film (C) when the another film (C) has plural layers is preferably 10 to 2000 µm, more preferably 20 to 1000 µm, and particularly preferably 30 to 850 µm. When the thickness of one layer of the another film (C) or the entire thickness of the another film (C) is within the above range, the another film (C) tends to achieve a good balance between exhibition of the function and a reduced weight. The thickness of the another film (C) may be measured by using a thickness meter, laser microscope, or the like.

### [Method for producing functional layer (A)-attached polyvinyl acetal resin film]

The present invention also relates to a method for producing a functional layer (A)-attached polyvinyl acetal resin film having a polyvinyl acetal resin film containing a plasticizer absorbed therein obtainable by the production method according to the present invention and a functional layer (A), comprising a lamination step of laminating the polyvinyl acetal resin film that has been contacted with the liquid plasticizer and a functional layer (A) such that a liquid plasticizer contact surface of the polyvinyl acetal resin film is in contact with the functional layer (A). In the present invention, a layer or film to be laminated in contact with the liquid plasticizer contact surface of the polyvinyl acetal resin film that has been contacted with the liquid plasticizer is referred to as a functional layer (A).

In a preferable embodiment, the method comprises, after the contact step and the heating step described above, a lamination step (i) of overlapping and laminating the liquid plasticizer contact surface and the functional layer (A).

In another preferable embodiment, the method comprises, in the heating step described above, a lamination step (ii) of overlapping, heating, and laminating the liquid plasticizer contact surface and the functional layer (A).

In another preferable embodiment, the method comprises, in the contact step described above, a contact step with the functional layer (A) of bringing the liquid plasticizer into contact with the functional layer (A); and a step of overlapping an obtained liquid plasticizer contact surface of the functional layer (A) and the polyvinyl acetal resin film.

In another preferable embodiment, the method comprises, in the contact step described above, a step of injecting the liquid plasticizer between the polyvinyl acetal resin film and the functional layer (A); and a step of overlapping the polyvinyl acetal resin film, the liquid plasticizer, and the functional layer (A).

### <Functional layer (A)>

In a preferable embodiment, the functional layer (A) is one, two, or more layers selected from the group consisting of a colored layer, a light absorption layer (specific wavelength electromagnetic wave absorption layers such as an infrared absorption layer and an ultraviolet absorption layer), a light reflection layer (specific wavelength electromagnetic wave reflection layers such as an infrared reflection layer and an ultraviolet reflection layer), a sound insulation layer, a light scattering layer, a light emitting layer (fluorescent or light emitting layer), an electrically conductive layer, a fiber layer, a double-image-preventing layer, a color correction layer, an electrochromic layer, a photochromic layer, a thermochromic layer, a design layer, a high elastic modulus layer, and a dynamic improving layer. In a more preferable embodiment, the functional layer (A) is one, two, or more layers selected from the group consisting of a colored layer, a light absorption layer, a light reflection layer, a sound insulating layer, a light scattering layer, a light emitting layer, an electrically conductive layer, a fiber layer, and a double-image-preventing layer. In the same manner as in the another layer (B) and the another film (C), the functional layer (A) may also be laminated on the entire surface or a part of the surface of the polyvinyl acetal resin film.

In another preferable embodiment, the functional layer (A) is a layer as a dynamic improving layer that contains one or more resins selected from the group consisting of a polyvinyl acetal resin, a polyester resin, a polycarbonate resin, a (meth)acrylic-based resin, a polyolefin resin, and an ionomer resin as the resin component, and preferably a layer that contains a polyvinyl acetal resin or PET as the resin component. When the functional layer (A) is a layer that contains PET as the resin component, the functional layer (A) may be a PET film that may have a layer with any function (e.g. infrared reflection function).

The functional layer (A) may have a protective layer. In this case, the protective layer is located at the opposite side of the surface of the functional layer (A) that is to be in contact with the liquid plasticizer contact surface of the polyvinyl acetal resin film.

In another preferable embodiment, the functional layer (A) is a layer that contains the polyvinyl acetal resin as the resin component and contains the plasticizer in an amount of 20% by mass or less, preferably less than 16% by mass, and more preferably 10% by mass or less based on the total mass of the functional layer (A). The lower limit value of the content of the plasticizer described above is not particularly limited. The content of the plasticizer described above is 0% by mass or more. The thickness of the functional layer (A) in this embodiment is preferably 10 µm or more, more preferably 20 µm or more, and still more preferably 30 µm or more, and preferably 350 µm or less, more preferably 300 µm or less, still more preferably 200 µm or less, still more preferably 150 µm or less, particularly preferably 100 µm or less, and particularly still more preferably 80 µm or less. When the thickness of the functional layer (A) is within the range between the lower limit value and the upper limit value, deterioration in impact absorption properties and the like required for the laminated glass tends to be reduced. As the polyvinyl acetal resin or the plasticizer in this embodiment, those described in the paragraph of <Resin in polyvinyl acetal resin film> or the paragraph of <Plasticizer> above may be used, and the preferable embodiments, production methods, and the like described in the paragraph of <Resin in polyvinyl acetal resin film> or the paragraph of <Plasticizer> may be applied to this embodiment in the same manner. Therefore, in this embodiment, the functional layer (A) may be the same as the polyvinyl acetal resin film before the contact step according to the present invention or the polyvinyl acetal resin film containing the plasticizer absorbed therein.

The thickness of the functional layer (A) is preferably 0.01 to 300 µm, more preferably 0.1 to 150 µm, and particularly preferably 1 to 80 µm. When the thickness of the functional layer (A) is within the above range, the functional layer (A) tends to exhibit desired functions (e.g. electroconductive properties, sound insulating properties, penetration resistance, light absorbability). The thickness of the functional layer (A) may be measured by using a thickness meter, laser microscope, or the like.

### [Lamination step of functional layer (A)-attached polyvinyl acetal resin film and another film (C)]

The present invention also relates to a method for producing a laminated film of a functional layer (A)-attached polyvinyl acetal resin film obtainable by the production method according to the present invention and another film (C), comprising a lamination step of laminating the functional layer (A)-attached polyvinyl acetal resin film and another film (C). The another film (C) may also be laminated on either surface of the functional layer (A)-attached polyvinyl acetal resin film optionally laminated with another layer (B), or on both surfaces thereof. The another film (C) may also be laminated on the entire surface of the functional layer (A)-attached polyvinyl acetal resin film or on a part of the surface thereof. For the lamination method of the functional layer (A)-attached polyvinyl acetal resin film and the another film (C) and also for the another film (C), the preferable embodiments described in the paragraph of <Lamination step of polyvinyl acetal resin film containing plasticizer absorbed therein and another film (C)> above may be applied in the same manner.

### [Polyvinyl acetal resin film containing plasticizer absorbed therein or functional layer (A)-attached polyvinyl acetal resin film]

The present invention also relates to a polyvinyl acetal resin film containing a plasticizer absorbed therein obtainable by the method according to the present invention.

The present invention also relates to a functional layer (A)-attached polyvinyl acetal resin film obtainable by the method according to the present invention.

A value representing the heat creep resistance (hereinafter, referred to as "heat creep resistance value (1)") of the polyvinyl acetal resin film containing the plasticizer absorbed therein or the functional layer (A)-attached polyvinyl acetal resin film according to the present invention (hereinafter, abbreviated as "film according to the present invention") measured by the measurement method (1) below is preferably 10 mm or less, more preferably 5 mm or less, still more preferably 4 mm or less, and particularly preferably 3 mm or less.

### <Measurement method (1) of heat creep resistance value (1)>

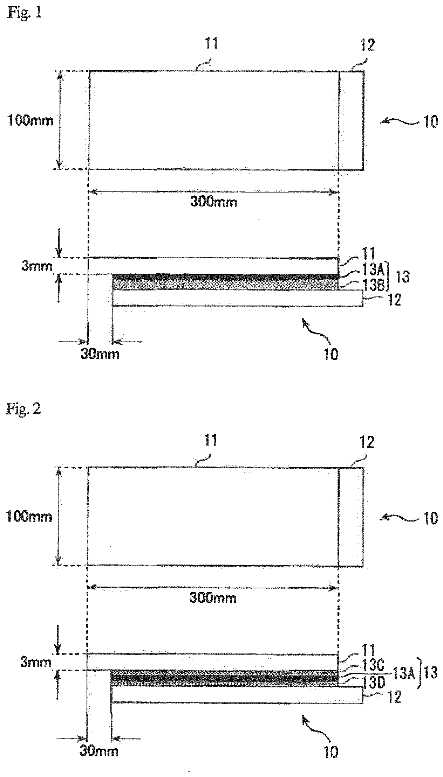

First, the film according to the present invention and one sheet of plasticized polyvinyl butyral resin film having a thickness of 0.76 mm and containing 72% by mass of a polyvinyl butyral resin in which the viscosity-average polymerization degree of polyvinyl alcohol as the raw material is 1700, the acetalization degree is 69 to 71 mol%, and the vinyl acetate unit content is 1 mol% or less and 28% by mass of triethylene glycol-bis-(2-ethylhexanoate) are cut into a size of 100 mm width and 270 mm length. As shown in Fig. 1, the cut sample is placed to be fit between a glass A and a glass B, the glass A and the glass B each having 100 mm width, 300 mm length, and 3 mm thickness, the glass A and the glass B being shifted lengthwise with respect to each other by 30 mm, such that the film according to the present invention and the plasticized polyvinyl butyral resin film are stacked in the order of the following "Structure 1". Then, the resultant is joined together at 140°C using a vacuum laminator and subjected to a treatment at 140°C and 1.2 MPa for 30 minutes using an autoclave to prepare a laminated glass.

### [Structure 1] glass A (3 mm thickness)/film according to the present invention/plasticized polyvinyl butyral resin film (0.76 mm thickness)/glass B (3 mm thickness)

Here, the glass A is placed in contact with the side of the liquid plasticizer contact surface of the polyvinyl acetal resin film containing the plasticizer absorbed therein or the side of the surface of the functional layer (A)-attached polyvinyl acetal resin film on which the functional layer is not laminated

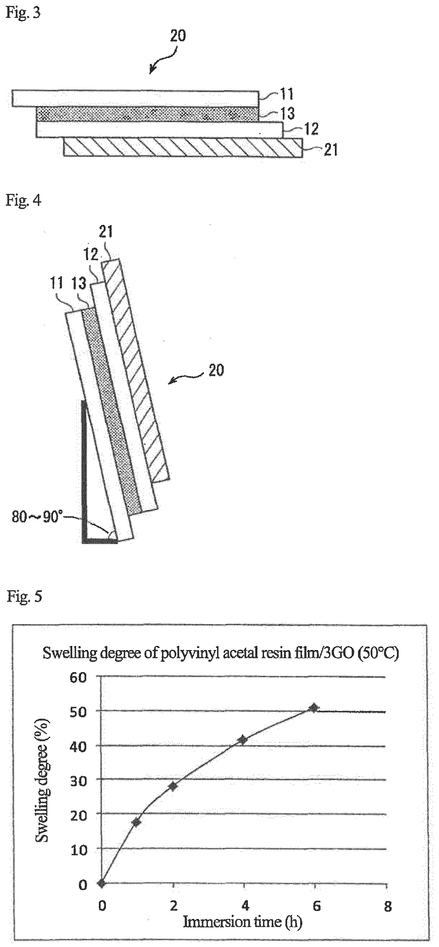

Next, as shown in Fig. 3, an iron plate of 1 kg is adhered to the surface of the glass B opposite to the joining surface with the plasticized polyvinyl butyral resin film by using an adhesive agent, and as shown in Fig. 4, the portion projecting 30 mm lengthwise is upward, and the glass A is fixed so that the iron plate-attached sample is placed at 80 to 90° with respect to the horizontal plane, and the portion of the glass B to which the iron plate is adhered is the upper portion or upper surface of the sample. In this state, the resultant is left in a thermostatic chamber at 100°C for one week The distance (mm) that the glass B is shifted is measured, and the value is taken as a heat creep resistance value (1). When the angle of the iron plate-attached sample with respect to the horizontal plane is any angle from 80 to 90°, the equivalent heat creep resistance value (1) can be obtained. Usually, the angle is set to 85°, and the heat creep resistance value (1) is measured.

When the heat creep resistance value (1) is the value described above or less, deformation and breakage of the functional layer, the another layer (B), or the another film (C) in preparation of a laminated glass can be easily reduced, and shifting of the glass in the obtained laminated glass at high temperature can be easily reduced.

A value representing the heat creep resistance (hereinafter, referred to as "heat creep resistance value (2)") measured by the measurement method (2) below is preferably 10 mm or less, more preferably 5 mm or less, still more preferably 4 mm or less, and particularly preferably 3 mm or less.

### <Measurement method (2) of heat creep resistance value (2)>

First, the film according to the present invention and two sheets of plasticized polyvinyl butyral resin films each having a thickness of 0.38 mm and containing 72% by mass of a polyvinyl butyral resin in which the viscosity-average polymerization degree of polyvinyl alcohol as the raw material is 1700, the acetalization degree is 69 to 71 mol%, and the vinyl acetate unit content is 1 mol% or less and 28% by mass of triethylene glycol-bis-(2-ethylhexanoate) are cut into a size of 100 mm width and 270 mm length. As shown in Fig. 2, the cut sample is placed to be fit between a glass A and a glass B, the glass A and the glass B each having 100 mm width, 300 mm length, and 3 mm thickness, the glass A and the glass B being shifted lengthwise with respect to each other by 30 mm, such that the film according to the present invention is sandwiched with two sheets of the plasticized polyvinyl butyral resin films in the order of the following "Structure 2". Then, the resultant is joined together at 140°C using a vacuum laminator and subjected to a treatment at 140°C and 1.2 MPa for 30 minutes using an autoclave to prepare a laminated glass.

### [Structure 2] glass A (3 mm thickness)/plasticized polyvinyl butyral resin film (0.38 mm thickness)/film according to the present invention/plasticized polyvinyl butyral resin film (0.38 mm thickness)/glass B (3 mm thickness)

Next, as shown in Fig. 3, an iron plate of 1 kg is adhered to the surface of the glass B opposite to the joining surface with the plasticized polyvinyl butyral resin film by using an adhesive agent, and as shown in Fig. 4, the portion projecting 30 mm lengthwise is upward, and the glass A is fixed so that the iron plate-attached sample is placed at 80 to 90° with respect to the horizontal plane, and the portion of the glass B to which the iron plate is adhered is the upper portion or upper surface of the sample. In this state, the resultant is left in a thermostatic chamber at 100°C for one week. The distance (mm) that the glass B is shifted is measured, and the value is taken as a heat creep resistance value (2). When the angle of the iron plate-attached sample with respect to the horizontal plane is any angle from 80 to 90°, the equivalent heat creep resistance value (2) can be obtained. Usually, the angle is set to 85°, and the heat creep resistance value (2) is measured.

When the heat creep resistance value (2) is the value described above or less, deformation and breakage of the functional layer, the another layer (B), or the another film (C) in preparation of a laminated glass can be easily reduced, and shifting of the glass in the obtained laminated glass at high temperature can be easily reduced.

The present invention is also directed to a film obtainable by peeling a layer having a protective function or a protective layer that is peelable. Examples thereof include the following films.
- A film obtainable by providing a laminated film of a polyvinyl acetal resin film containing a plasticizer absorbed therein obtainable by the method according to the present invention or a functional layer (A)-attached polyvinyl acetal resin film obtainable by the method according to the present invention and another film (C) in which the another film (C) is a resin film with a layer having a protective function, and peeling the layer having the protective function from the laminated film.
- A polyvinyl acetal resin film containing a plasticizer absorbed therein obtainable by providing a polyvinyl acetal resin film containing a plasticizer absorbed therein obtainable by the method according to the present invention in which the polyvinyl acetal resin film before the contact step is laminated with a protective layer as the another layer (B), and peeling the protective layer from the polyvinyl acetal resin film containing the plasticizer absorbed therein.
- A functional layer (A)-attached polyvinyl acetal resin film obtainable by providing a functional layer (A)-attached polyvinyl acetal resin film obtainable by the method according to the present invention in which the polyvinyl acetal resin film before the contact step is laminated with a protective layer as the another layer (B), and peeling the protective layer from the functional layer (A)-attached polyvinyl acetal resin film.
- A functional layer (A)-attached polyvinyl acetal resin film obtainable by providing a functional layer (A)-attached polyvinyl acetal resin film obtainable by the method according to the present invention in which the functional layer (A) has a protective layer, and peeling the protective layer from the functional layer (A)-attached polyvinyl acetal resin film having the protective layer.

A laminate can be produced by sandwiching the film described above, which is obtainable by peeling the layer having the protective function or the protective layer, between two transparent substrates.

### [Laminate]

The present invention also relates to a laminate in which the functional layer (A)-attached polyvinyl acetal resin film obtainable by the method according to the present invention or the polyvinyl acetal resin film containing the plasticizer absorbed therein obtainable by the method according to the present invention is sandwiched between two transparent substrates.

The transparent substrate is preferably organic glass or inorganic glass from the viewpoint of transparency, weather resistance, and dynamic strength. Specifically, it is preferably inorganic glass (may be simply referred to as "glass" in the present specification) or organic glass such as a methacrylic resin sheet, a polycarbonate resin sheet, a polystyrene-based resin sheet, a polyester-based resin sheet, and a polycycloolefin-based resin sheet, more preferably inorganic glass, a methacrylic resin sheet, or a polycarbonate resin sheet, and particularly preferably inorganic glass. Accordingly, the present invention is also directed to a laminated glass, wherein each of the two transparent substrates in the laminate is a glass. The inorganic glass is not particularly limited, and examples include float glass, tempered glass, semi-tempered glass, chemically tempered glass, green glass, and quartz glass.

The laminate according to the present invention has the intermediate film between two transparent substrates. The intermediate film is composed of the polyvinyl acetal resin film containing the plasticizer absorbed therein, optionally the another layer (B), and optionally the another film (C) which are laminated in any order, or is composed of the functional layer (A)-attached polyvinyl acetal resin film, optionally the another layer (B), and optionally the another film (C) which are laminated in any order.

In a preferable embodiment, the polyvinyl acetal resin film containing the plasticizer absorbed therein is directly in contact with the transparent substrate in the laminate from the viewpoint of easily obtaining good adhesive strength with the transparent substrate (particularly glass).

The intermediate film may have a plasticized polyvinyl acetal resin film as the another layer (B) or the another film (C). It is preferable to place one or more plasticized polyvinyl acetal resin films in addition to the polyvinyl acetal resin film containing the plasticizer absorbed therein or the functional layer (A)-attached polyvinyl acetal resin film between two transparent substrates from the viewpoint of penetration resistance of the laminated glass.

In the laminate according to the present invention, the difference between the vinyl alcohol unit content of the polyvinyl acetal resin in the film according to the present invention (the polyvinyl acetal resin film containing the plasticizer absorbed therein or the functional layer (A)-attached polyvinyl acetal resin film according to the present invention) and the vinyl alcohol unit content of the polyvinyl acetal resin in the plasticized polyvinyl acetal resin film is preferably 6 mol% or less, more preferably 4 mol% or less, and particularly preferably 3 mol% or less. When the polyvinyl acetal resin in the film according to the present invention and/or the plasticized polyvinyl acetal resin film is composed of a mixture of more than one resin, the difference between the vinyl alcohol unit content of at least one polyvinyl acetal resin contained in the film according to the present invention and the vinyl alcohol unit content of at least one polyvinyl acetal resin contained in the plasticized polyvinyl acetal resin film is preferably the upper limit value or less. It is preferable that the difference is the upper limit value or less, since the refractive index difference between the film according to the present invention and the plasticized polyvinyl acetal resin film is small in the equilibrium state after a plasticizer has migrated in the laminate, so that when the plasticized polyvinyl acetal resin film and the film according to the present invention that are different in size are used, its boundary is hardly visible.

Besides, one of preferable embodiments is that the vinyl alcohol unit content of the polyvinyl acetal resin in the film according to the present invention is set smaller than the vinyl alcohol unit content of the polyvinyl acetal resin in the plasticized polyvinyl acetal resin film, so that the average amount of the plasticizer in the film according to the present invention in the equilibrium state after the plasticizer has migrated in the laminate is 30% by mass or more. In this case, the vinyl alcohol unit content of the polyvinyl acetal resin in the film according to the present invention is smaller than the vinyl alcohol unit content of the polyvinyl acetal resin in the plasticized polyvinyl acetal resin film by preferably 6 mol% or more, and more preferably 10 mol% or more. It is preferable that the difference of the vinyl alcohol unit content is the lower limit value or more, since the amount of the plasticizer in the film according to the present invention in the equilibrium state can be sufficiently high, so that a laminated glass to which a sound insulating function is imparted can be easily obtained.

When the polyvinyl acetal resin surface of the film according to the present invention is in contact with the another layer (B) or the another film (C) in the laminate, at the polyvinyl acetal resin surface, the ten-point average roughness Rz value is preferably 20 µm or less, more preferably 5 µm or less, and particularly preferably 3 µm or less, and the average interval Sm value of concavities and convexities is preferably 500 µm or more, more preferably 1000 µm or more, and particularly preferably 1300 µm or more.

The surface roughness Rz value at the liquid plasticizer contact surface of the polyvinyl acetal resin film is preferably 5 jam or less, and more preferably 3 µm or less, and the average interval Sm value of concavities and convexities is preferably 500 µm or more, more preferably 1000 µm or more, and particularly preferably 1300 µm or more. When the Rz value is the upper limit value or less, or the Sm value is the lower limit value or more, uniform printing, coating, or lamination can be easily achieved, and joining unevenness between the film according to the present invention or the liquid plasticizer contact surface and an ink, a metal foil or the like can be easily reduced.

When the polyvinyl acetal resin surface of the film according to the present invention is in contact with a glass in the laminate, at the polyvinyl acetal resin surface, the ten-point average roughness Rz value is preferably 20 µm or less, and more preferably 10 µm or less, and preferably 1 µm or more, and more preferably 2 µm or more, and the average interval Sm value of concavities and convexities is preferably 1500 µm or less, more preferably 1000 µm or less, and particularly preferably 700 µm or less. When the Rz value is the upper limit value or less or the Sm value is the upper limit value or less, deaeration properties can be superior, distortion and cracks of the another layer (B), the another film (C), or the functional layer (A), (X), or (Y) can be reduced, and wrinkles thereof hardly occur.

The Rz value and the Sm value are measured by using a surface roughness meter or laser microscope in accordance with JIS B0601-1994.

As a method of adjusting the Rz value to the upper limit value or less and the Sm value to the lower limit value or more, a melt extrusion method (for example, a method using a T-die and an inflation molding method), a solvent casting method, or the like may be employed. Preferably, the Rz value and the Sm value can be adjusted by film-forming a melted product extruded from a T-die with a smooth cooling roll. To form a smoother surface, it is preferable to use an elastic roll and a mirror surface metal roll in combination, and more preferable to use a metal elastic roll and a mirror surface metal roll in combination.

The laminate according to the present invention may have the following layer structures, but is not limited to these.
(1) Four layer structure of transparent substrate A/polyvinyl acetal resin film/functional layer(A)/transparent substrate B,
(2) Five layer structure of transparent substrate A/polyvinyl acetal resin film/functional layer(A)/another film (C)/transparent substrate B,
(3) Five layer structure of transparent substrate A/another layer (B)/polyvinyl acetal resin film/functional layer(A)/transparent substrate B,
(4) Five layer structure of transparent substrate A/polyvinyl acetal resin film/another layer (B)/another film (C)/transparent substrate B,
(5) Five layer structure of transparent substrate A/another layer (B)/polyvinyl acetal resin film/another film (C)/transparent substrate B,
(6) Six layer structure of transparent substrate A/polyvinyl acetal resin film/another layer (B)/functional layer(A)/another film (C)/transparent substrate B,
(7) Six layer structure of transparent substrate A/another film (C)/polyvinyl acetal resin film/functional layer(A)/another film (C)/transparent substrate B,
(8) Six layer structure of transparent substrate A/another layer (B)/polyvinyl acetal resin film/functional layer(A)/another film (C)/transparent substrate B,
(9) Six layer structure of transparent substrate A/another film (C)/another layer (B)/polyvinyl acetal resin film/functional layer(A)/transparent substrate B,
(10) Six layer structure of transparent substrate A/another film (C)/polyvinyl acetal resin film/functional layer(A)/another film (C)/transparent substrate B,
(11) Seven layer structure of transparent substrate A/another film (C)/another layer (B)/polyvinyl acetal resin film/functional layer(A)/another film (C)/transparent substrate B,
(12) Structures in which the functional layers (A) in the above layer structures are replaced with the functional layers (Y),
(13) Six layer structure of transparent substrate A/another film (C)/functional layer(A)/functional layer (Y)/polyvinyl acetal resin film/transparent substrate B.

In the layer structures above, the another layer (B) may be occasionally the functional layer (X).

### [Method for producing laminate]

The laminate according to the present invention can be produced by a conventionally publicly-known method. For example, a laminate can be produced by stacking and placing the film according to the present invention that may have the another layer (B), and optionally the another film (C) in any order on the transparent substrate; further stacking another sheet of transparent substrate thereon; mutually fusing them across the entire surface or locally by preliminary compression bonding; and then treating the resultant in an autoclave.

When one or more another films (C) are used, a laminate can be produced by, in addition to the method exemplified above, a method of joining the film according to the present invention that may have the another layer (B) and the another film (C) together in advance; placing the resultant between two transparent substrates; and subjecting the resultant to preliminary compression bonding and an autoclave treatment

Examples of the preliminary compression bonding step include a method of deaeration at reduced pressure such as a vacuum bag, a vacuum ring, and a vacuum laminator, a method of deaeration using a nip roll, and a method of compression molding at high temperature from the viewpoint of removing excess air and enabling light joining between adjacent layers.

For example, as described in EP-B1-1235683, a vacuum bag method or a vacuum ring method can be performed at about 2 × 10⁴ Pa and 130 to 145°C.

A vacuum laminator is composed of a chamber that can be heated and vacuumed. In the chamber, a laminate can be formed within about 20 to 60 minutes. In general, such formation of the laminate can be performed at reduced pressure of 1 Pa to 3 × 10⁴ Pa and at a temperature of 100 to 200°C, and particularly 130 to 160°C. When the vacuum laminator is used, the subsequent autoclave treatment is not necessarily performed depending on the temperature and the pressure.

When the autoclave treatment is performed, it can be performed, for example, at a pressure of 1 × 10⁶ to 1.5 × 10⁶ Pa and at a temperature of about 100 to 145°C for about 20 minutes to 2 hours.

The laminate according to the present invention can be used as a laminated glass, for example, in buildings or vehicles. Examples of the glass for vehicles include a windshield, rear glass, roof glass, or side glass for vehicles such as railway trains, electric trains, automobiles, vessels, and aircraft.

### EXAMPLES

Hereinafter, the present invention will be explained in more detail with reference to the Examples. However, it is not limited to any of the Examples.

The physical property values of Resin A used as polyvinyl butyral resin 1 (hereinafter, referred to as "Resin 1") and Resin B used as polyvinyl butyral resin 2 (hereinafter, referred to as "Resin 2") in Examples 1 to 15 and Comparative Examples 1 to 7 are shown in Table 1.

### [Table 1]

**Table 1**

| Resin | Vinyl alcohol unit content (mol%) | Acetalization degree (mol%) | Vinyl acetate unit content (mol%) | Viscosity of 10% by mass toluene/ethanol = 1/1 solution (mPa·s) |
|---|---|---|---|---|
| A | 28.5 | 70.8 | 0.7 | 152 |
| B | 28.9 | 70.4 | 0.7 | 1410 |

In any of Examples 1 to 15 and Comparative Examples 1 to 7,3GO was used as a plasticizer. 3GO has a high boiling point of 344°C and is in liquid form at room temperature. Therefore, 3GO was singly used as a liquid plasticizer in Examples 1 to 15 and Comparative Examples 1 to 7.

### Example 1: Polyvinyl acetal resin film containing plasticizer absorbed therein

Resin 1 and Resin 2 were blended at a mass ratio of 75 : 25, and the mixture was melt-kneaded and extruded into strands, and then pelletized. The obtained pellets were melt-extruded using a single screw extruder with a T-die. Using a metal elastic roll, a polyvinyl acetal resin film a having smooth both surfaces (having a surface roughness Rz of 5 µm or less) and a thickness of 50 µm was obtained

### <Evaluation of film-forming properties of polyvinyl acetal resin film>

The film-forming properties when the pellets were melt-extruded using the single screw extruder were evaluated by the following criteria. Results are shown in Table 2.
A Film-forming properties were very good.
B Film formation was good.
C Film formation was possible although coloring and generation of decomposed gas occurred.
D Film formation was impossible.

### <Measurement of peak top molecular weight and molecular weight distribution of resin for constituting polyvinyl acetal resin film>

The resin for constituting the polyvinyl acetal resin film was analyzed with GPC. For GPC analysis, GPCmaxTDA305 and RI detector manufactured by Viscotek Corporation was used as an analysis device, one obtained by connecting two pieces GPC KF-806L and GPC KF-806L manufactured by Shodex and additionally connecting KF-G manufactured by Shodex as a guard column to the end of the connected two pieces was used as a column, a THF solvent and polystyrene standards (Easical GPC/SEC Calibration Standards PS-1 manufactured by Agilent Technologies) were used, and OmniSE, C4.7 was used as analysis software. Measurement was conducted at 40°C with an injection amount of 100 µL, and the peak top molecular weight and the molecular weight distribution of the resin were determined. Results are shown in Table 2.

### <Plasticization of polyvinyl acetal resin film>

The liquid plasticizer was coated on the surface of the obtained polyvinyl acetal resin film a in an amount of 10 parts by mass based on 100 parts by mass of the polyvinyl acetal resin film a, and the resultant was heated in a thermostatic chamber at 50°C for 4 hours to obtain a polyvinyl acetal resin film a' containing the plasticizer absorbed therein.

### <Measurement of heat creep resistance value (1) and heat creep resistance value (2)>

The heat creep resistance value (1) and the heat creep resistance value (2) of the polyvinyl acetal resin film a' were respectively measured in accordance with the methods described in the paragraphs of <Measurement method (1) of heat creep resistance value (1)> and <Measurement method (2) of heat creep resistance value (2)> above. Results are shown in Table 2.

### Examples 2 to 4: Polyvinyl acetal resin film containing plasticizer absorbed therein

Polyvinyl acetal resin films b, c, and d each having smooth both surfaces (having a surface roughness Rz of 5 µm or less) and a thickness of 50 µm were produced in the same manner as in Example 1 except that the mixing ratio of Resin 1 and Resin 2 was changed to the mixing ratios described in Table 2.

Next, the film-forming properties of the polyvinyl acetal resin films were evaluated, and the peak top molecular weights and the molecular weight distributions of the resins for constituting the polyvinyl acetal resin films were determined in the same manner as in Example 1. Then, the polyvinyl acetal resin films b, c, and d were treated in the same manner as in Example 1 to obtain polyvinyl acetal resin films b', c', and d' containing the plasticizer absorbed therein, and the heat creep resistance values (1) and the heat creep resistance values (2) were measured. Results are shown in Table 2.

### Example 5: Functional layer (A)-attached polyvinyl acetal resin film

The liquid plasticizer was coated on the surface of the polyvinyl acetal resin film d in an amount of 10 parts by mass based on 100 parts by mass of the polyvinyl acetal resin film d. The polyvinyl acetal resin film d and a PET film (functional layer, thickness 50 µm) having an infrared reflection layer composed of a metal sputtering layer were overlapped without generating air bubbles therebetween such that the liquid plasticizer contact surface of the polyvinyl acetal resin film d was in contact with the PET surface that had been subjected to a corona treatment of the PET film. After the resultant was heated in a thermostatic chamber set at 50°C for 4 hours, the heat creep resistance value (1) and the heat creep resistance value (2) were measured in the same manner as in Example 1. In the measurement of the heat creep resistance value (1), the polyvinyl acetal resin film of the functional layer (A)-attached polyvinyl acetal resin film was placed directly in contact with the glass. Results are shown in Table 2.

### [Table 2]

**Table 2**

| | Polyvinyl acetal resin film | Resin 1 | Resin 2 | Resin: Resin 2 (mass ratio) | Viscosity of 10% by mass toluene/ethanol = 1/1 solution of resin (mPa·s) | | | Thickness of film described in left column (µm) | Film-forming properties | GPC analysis of resin for constituting resin film described in left column | | Heat creep resistance value (1) (mm) | Heat creep resistance value (2) (mm) |
|---|---|---|---|---|---|---|---|---|---|---|---|---|---|
| | | | | | Resin 1 | Resin 2 | Resin 1 + Resin 2 | | | Peak top molecular weight | Molecular weight distribution Mw/Mn | | |
| Example 1 | a | A | B | 75:25 | 152 | 1410 | 245 | 50 | A | 129,000 | 2.9 | 5.1 | 4.8 |
| Example 2 | b | A | B | 50:50 | 152 | 1410 | 444 | 50 | B | 147,000 | 3.2 | 2.3 | 2.5 |
| Example 3 | c | A | B | 25:75 | 152 | 1410 | 783 | 50 | C | 162,200 | 3.1 | 1.6 | 1.5 |
| Example 4 | d | A | - | 100:0 | 152 | - | - | 50 | A | 111,700 | 2.5 | >30 | >30 |
| Exanple5 | d | A | - | 100:0 | 152 | - | - | 50 | A | 111,700 | 2.5 | 4.7 | >30 |

As shown in Table 2, when the polyvinyl acetal resin film according to the present invention was produced by using the resin in which the viscosity of a solution containing 1 0% by mass of the resin in toluene/ethanol (1/1 mass ratio) was more than 200 mPa·s (Examples 1 to 3), superior heat creep resistance value (1) and heat creep resistance value (2) were obtained. This shows that when such a polyvinyl acetal resin film according to the present invention was used to produce a laminated glass, deformation and breakage of the functional layer (A), (X), or (Y), the another layer (B), or the another film (C) were satisfactorily reduced, and shifting of the glass in the obtained laminated glass at high temperature was satisfactorily reduced.

In contrast, when the polyvinyl acetal resin film was produced by using the resin in which the viscosity of a solution containing 1 0% by mass of the resin in toluene/ethanol (1/1 mass ratio) was 200 mPa·s or less (Example 4), only a heat creep resistance value (1) and a heat creep resistance value (2) exceeding 30 mm were able to be obtained. When such a polyvinyl acetal resin film was used to produce a laminated glass, deformation and breakage of the functional layer (A), (X), or (Y), the another layer (B), or the another film (C) were not sufficiently reduced, and shifting of the glass in the obtained laminated glass at high temperature was not sufficiently reduced

On the other hand, even though the polyvinyl acetal resin film having the same solution viscosity as Example 4 was used, in the heat creep resistance value (1) of Example 5 in the form of enabling the PET layer to prevent the migration of the plasticizer from the intermediate film, the shifting of the glass could be reduced.

### Example 6: Influence of heating on adhesion strength of two polyvinyl acetal resin films adhered with liquid plasticizer

A polyvinyl acetal resin film e was produced in the same manner as in Example 1 except that polyvinyl acetal resin A was used instead of the mixture of polyvinyl acetal resins A and B, and the thickness was changed from 50 µm to 180 µm. The obtained polyvinyl acetal resin film e had a surface roughness Rz of 5 µm or less on both surfaces. The polyvinyl acetal resin film e was cut into two sheets each having a 10 cm square size.

Four polyimide tapes each having a width of 1 cm were bonded onto the surface of one polyvinyl acetal resin film e to form a rectangular area (8 cm × 5 cm) that allowed the liquid plasticizer to be poured into the inside of the four polyimide tapes. These four polyimide tapes serve as walls to intercept the overflow of the poured liquid plasticizer. Here, the rectangular area (10 cm × 3 cm) other than the area surrounded by the four polyimide tapes in the polyvinyl acetal resin film e is used as a portion to be clamped by chucks in a T-peel test device.

The liquid plasticizer (0.21 g) was poured into the rectangular area (8 cm × 5 cm), and the other polyvinyl acetal resin film e was stacked thereon without generating bubbles therebetween. The resultant was heated at 50°C for a predetermined time period described in Table 3 below. Next, five test pieces each having 10 cm length × 1 cm width were cut out such that the rectangular area (10 cm × 3 cm) was used as a portion to be clamped by chucks in a T-peel test device, and a T-peel test (tensile speed: 5 cm/min) was performed. The average value of the measured maximum peel strength was shown in Table 3.

### Example 7: Influence of heating on adhesion strength of two polyvinyl acetal resin films adhered with liquid plasticizer

The maximum peel strength was measured in the same manner as in Example 6 except that the heating temperature was changed from 50°C to 55°C. The average value of the measured maximum peel strength was shown in Table 3.

### [Table 3]

**Table 3**

| Example | Heating temperature[°C] | Heating time [min] | 30 | 60 | 120 | 240 |
|---|---|---|---|---|---|---|
| 6 | 50 | Average value of maximum peel strength [N/cm] | 20.9 | 26.7* | 31.3* | 40.3* |
| 7 | 55 | | 28.3* | 38.5* | 42.2* | - |

| | | | | | | |
|---|---|---|---|---|---|---|
| * Breaking occurred before 10 mm displacement | | | | | | |

### Comparative Example 1

Test pieces were tried to be produced in the same manner as in Example 6 except for being allowed to stand at room temperature (20°C) for a predetermined time period instead of 50°C; however, two polyvinyl acetal resin films were not adhered and peeled away from each other.

The results of Examples 6 and 7 and Comparative Example 1 showed that heating at certain temperatures in the heating step allowed the plasticizer to be absorbed in the polyvinyl acetal resin films, achieving lamination with sufficient adhesion strength.

### Example 8: Influence of heating on absorption of plasticizer in polyvinyl acetal resin film

A polyvinyl acetal resin film f was produced in the same manner as in Example 1 except that polyvinyl acetal resin A was used instead of the mixture of polyvinyl acetal resins A and B, and the thickness was changed from 50 µm to 250 µm The obtained polyvinyl acetal resin film f had a surface roughness Rz of 5 µm or less on both surfaces. Test pieces each having 2 cm × 4 cm were cut out from the polyvinyl acetal resin film f and precisely weighed The liquid plasticizer was poured into a sample bottle, and the test pieces were immersed with the liquid plasticizer. After being allowed to stand at 50°C for predetermined time periods (1 hour, 2 hours, 4 hours, and 6 hours), each of the test pieces was taken out, and the liquid plasticizer attached on the surface was wiped out. The test piece was precisely weighed, and the swelling degree thereof was calculated Results are shown in Fig. 5.

### Comparative Example 2

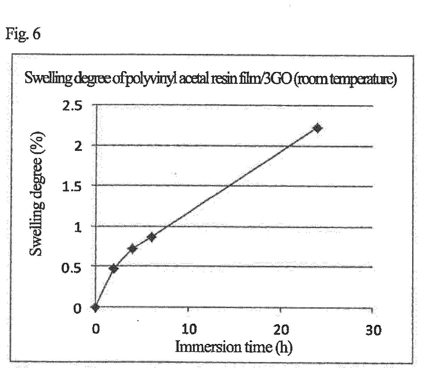

The swelling degree was calculated in the same manner as in Example 8 except that the test pieces were allowed to stand at room temperature (20°C) for predetermined time periods (2 hour, 4 hours, 6 hours, and 24 hours) instead of 50°C. Results are shown in Fig. 6.

The results of Example 8 and Comparative Example 2 showed that the absorption rate of the plasticizer in the polyvinyl acetal resin film was extremely slow at room temperature, while heating at a certain temperature in the heating step enabled the plasticizer to be sufficiently absorbed.

### Example 9: Formation of functional layer with liquid plasticizer containing functional material

The polyvinyl acetal resin film a was cut into a size of 10 cm × 15 cm, and the polyvinyl acetal resin film a and a PET film having a thickness of 50 µm as another layer (B) (protective layer) were laminated by thermocompression bonding. A nano silver ink in which nano silver particles were dispersed in the liquid plasticizer was screen printed on the surface of the polyvinyl acetal resin film a such that the nano silver ink had a thickness of 5 µm, and a linear electroconductive structure pattern with 1 mm in line width, 1 cm in pitch width, 8 cm in length, and 5 in number was formed. The film was allowed to stand in a thermostatic chamber set at 50°C overnight to form an electrically conductive layer [functional layer(Y)], thereby a polyvinyl acetal resin film (F1) on which the electrically conductive layer [functional layer (Y)] was formed was obtained. A plasticized polyvinyl butyral resin film (the content of a polyvinyl butyral resin was 72% by mass and the content of 3GO was 28% by mass, wherein the vinyl alcohol unit content of the polyvinyl butyral resin was 20.0 mol%, and the viscosity-average polymerization degree of polyvinyl alcohol as the raw material was about 1700) having a thickness of 0.76 mm as the another film (C) (resin film having sound insulating properties), the surface of which had been made flat by heat pressing, was laminated on the printed surface of the film (F1) by heat pressing, thereby a laminated film of the functional layer (A)-attached polyvinyl acetal resin film and the another film (C) was obtained. The PET film was peeled from the laminated film. The resultant was sandwiched between two sheets of glass each having a thickness of 3 mm, preliminary compression-bonded by a vacuum bag method, and put in an autoclave (140°C, 1.2 MPa, 1 hour) to prepare a laminated glass. No damage was seen in the linear electroconductive structure of the electrically conductive layer.

### Example 10:

An infrared reflection layer-attached PET film was thermocompression-bonded on the polyvinyl acetal resin film (F1) on which the electrically conductive layer [functional layer (Y)] was formed obtained in Example 9 such that the easy-adhesive PET surface of the infrared reflection layer-attached PET film was in contact with the printed surface of the polyvinyl acetal resin film (F1), and thus a film (F2) was prepared.

A laminated glass having the electrically conductive layer and the infrared reflection function was prepared in the same manner as in Example 9 except that the film (F2) was used instead of the film (F1). At this time, the infrared reflection layer of the infrared reflection layer-attached PET film of the film (F2) was in contact with the another film (C). No damage was seen in the linear electroconductive structure of the electrically conductive layer.

### Comparative Example 3

A laminated glass was prepared in the same manner as in Example 9 except that the film was allowed to stand at room temperature (20°C) overnight instead of 50°C. The nano silver ink was not dried, and damage was seen in the linear electroconductive structure of the electrically conductive layer.

### Comparative Example 4

A laminated glass was prepared in the same manner as in Example 9 except that a mineral spirit was used as the dispersion medium of the nano silver particles instead of the liquid plasticizer, and the film was allowed to stand at 120°C overnight instead of 50°C. The laminated film shrank and greatly deformed, and damage was seen in the linear electroconductive structure of the electrically conductive layer.

### Comparative Example 5

Printing was performed in the same manner as in Example 9 except that methanol was used as the dispersion medium of the nano silver particles instead of the liquid plasticizer. After repeating printing for a while, the dried ink caused clogging in the screen and thus failed to proper printing.

### Comparative Example 6

A laminated glass was prepared in the same manner as in Example 9 except that an ethanol dispersion liquid of carbon nanotube was used instead of the nano silver ink, and the film was allowed to stand at 70°C for 6 hours instead of at 50°C overnight Numerous foams were seen in the laminated glass.

The results of Example 9 and Comparative Example 3 showed that heating at a certain temperature in the heating step allowed the plasticizer to be absorbed and thus the electrically conductive layer was satisfactorily formed, and the linear electroconductive structure of the electrically conductive layer was satisfactorily maintained in the laminated glass.

The results of Example 9 and Comparative Examples 4 to 6 showed that Example 9 in which the liquid plasticizer was used as the dispersion medium was able to avoid the problems such as damage on the linear electroconductive structure of the electrically conductive layer resulting from high-temperature drying to volatilize the dispersion medium (Comparative Example 4), printing defects resulting from the use of the volatile dispersion medium used for eliminating high-temperature drying of the dispersion medium (Comparative Example 5), and generation of foams due to the residual dispersion medium resulting from the use of the low volatile dispersion medium used for eliminating high-temperature drying of the dispersion medium (Comparative Example 6).

### Example 11: Influence of absorption of plasticizer into polyvinyl acetal resin film on plasticizer migration

The polyvinyl acetal resin film a and a PET film (thickness 50 µm, another layer (B)) having an infrared reflection layer composed of a metal sputtering layer were laminated by thermocompression bonding such that the polyvinyl acetal resin film a was in contact with the PET surface that had been subjected to a corona treatment of the PET film. The film laminated as described above was placed such that the surface of the polyvinyl acetal resin film a of the film laminated as described above was in contact with the liquid plasticizer (3GO) in a container, and allowed to stand at 50°C overnight The amount of the liquid plasticizer brought into contact with the polyvinyl acetal resin film a was 38 parts by mass based on 100 parts by mass of the polyvinyl acetal resin film a. A sample having a 3 cm square size was cut out from the obtained polyvinyl acetal resin film containing the plasticizer absorbed therein.

The sample was placed at the central portion of a glass having a 5 cm square size and a thickness of 3 mm such that the liquid plasticizer contact surface was in contact with the glass. Further thereon, a plasticized polyvinyl butyral resin film (the content of a polyvinyl butyral resin was 72% by mass and the content of 3GO was 28% by mass, wherein the vinyl alcohol unit content of the polyvinyl butyral resin was 20.0 mol%, and the viscosity-average polymerization degree of polyvinyl alcohol as the raw material was about 1700) having a 5 cm square size and a thickness of 0.76 mm as the another film (C) (resin film having sound insulating properties) was placed. Further thereon, a glass having a 5 cm square size and a thickness of 3 mm was placed. The resultant was preliminary compression-bonded by a vacuum bag method, and put in an autoclave (140°C, 12 MPa, 1 hour) to prepare a laminated glass.

The obtained laminated glass was allowed to stand at 100°C for one week; nevertheless, optical unevenness was not seen inside and outside of the end part of the film in which the polyvinyl acetal resin film a and the PET film were laminated. This was probably because the absorption of the plasticizer into the polyvinyl acetal resin a reduced the difference between the amount of the plasticizer contained in the polyvinyl acetal resin a and the amount of the plasticizer contained in the plasticized polyvinyl butyral resin film, and as a result, the migration of the plasticizer between the polyvinyl acetal resin film containing the plasticizer absorbed therein and the plasticized polyvinyl butyral resin film was decreased.

### Comparative Example 7

A laminated glass was prepared in the same manner as in Example 11 except that a polyvinyl acetal resin film a having a 5 cm square size, a PET film (50 µm) having a 3 cm square size, and a plasticized polyvinyl butyral resin film (the content of a polyvinyl butyral resin was 72% by mass and the content of 3GO was 28% by mass, wherein the vinyl alcohol unit content of the polyvinyl butyral resin was 20.0 mol%, and the viscosity-average polymerization degree of polyvinyl alcohol as the raw material was about 1700) having a 5 cm square size and a thickness of 0.76 mm were placed in this order between two sheets of glass each having a 5 cm square size and a thickness of 3 mm.

The obtained laminated glass was allowed to stand at 100°C for one week, and optical unevenness was seen in the vicinity of about 1 cm inside from the end part of the PET film. This was probably because the plasticizer penetrated unevenly from the plasticized polyvinyl butyral resin film to the polyvinyl acetal resin film a at the end part of the PET film.

### Example 12: Production of laminated glass using one obtainable by providing functional layer (A)-attached polyvinyl acetal resin film prepared by using polyvinyl acetal resin film on which another layers (B) (protective layer and electrically conductive layer) were laminated, and peeling protective layer therefrom

### <Production of polyvinyl acetal resin film with copper foil joined>

A copper foil having a thickness of 7 µm, one surface of which had been subjected to a blackening treatment, was stacked onto the produced polyvinyl acetal resin film a in such a direction that the blackening-treated surface was in contact with the polyvinyl acetal resin film a. Next, easy-adhesive PET films each having a thickness of 50 µm were used to sandwich the laminate in which the polyvinyl acetal resin film a and the copper foil were stacked. The resultant was allowed to pass (pressure: 0.2 MPa, speed 0.5 m/minute) between thermocompression bonding rolls set at 120°C. Then, the easy-adhesive PET film at the copper foil side was peeled therefrom to obtain a polyvinyl acetal resin film, one surface of which was joined with the easy-adhesive PET and the other surface of which was joined with the copper foil.

### <Production of (easy-adhesive PET-attached) polyvinyl acetal resin film having electrically conductive layer>

A dry film resist was laminated on the copper foil of the polyvinyl acetal resin film with the easy-adhesive PET and the copper foil joined, and then an etching resistance pattern was formed using a photolithography technique. Thereafter, the easy-adhesive PET-attached polyvinyl acetal resin film on which the etching resistance pattern had been formed was immersed in a copper etching solution to form an electrically conductive layer (electroconductive structure). Then, the remaining photoresist layer was removed by a common method. Thereby, an easy-adhesive PET-attached polyvinyl acetal resin film having the electrically conductive layer was obtained. The electrically conductive layer had a copper mesh structure in which copper wires having a line width of 10 µm were arranged in a grid pattern at intervals of 500 µm inside a square of 5 cm in length and width.

### <Joining of easy-adhesive PET-attached polyvinyl acetal resin film having electrically conductive layer and functional layer (A) (infrared reflection layer-attached PET film>

3GO was coated on the surface having the electrically conductive layer of the easy-adhesive PET-attached polyvinyl acetal resin film having the electrically conductive layer, the amount of 3GO being 10 parts by mass based on 100 parts by mass of the polyvinyl acetal resin film. The easy-adhesive PET-attached polyvinyl acetal resin film having the electrically conductive layer and a PET film (thickness 50 µm) having an infrared reflection layer composed of a metal sputtering layer were overlapped without generating air bubbles therebetween such that the liquid plasticizer contact surface of the easy-adhesive PET-attached polyvinyl acetal resin film was in contact with the PET surface that had been subjected to a corona treatment of the PET film. The resultant was heated in a thermostatic chamber set at 50°C for 4 hours to obtain a functional layer (A)-attached polyvinyl acetal resin film produced by using the polyvinyl acetal resin film on which the another layer (B) was laminated. The obtained film was a film having an infrared reflection function and an electrical conductive function (electromagnetic wave shielding performance).

### <Preparation of laminated glass>

The obtained film was cut out in a size of 5 cm length and 5 cm width so that the cut out film had the copper mesh, and the easy-adhesive PET film (protective film) was peeled therefrom. The resultant was placed on a glass with 10 cm in length, 10 cm in width, and 3 mm in thickness. At this time, the polyvinyl acetal resin layer of the film was placed in a direction of being in contact with the glass, and the electrically conductive layer was positioned near the center of the glass. Further thereon, a plasticized polyvinyl butyral resin film (the content of a polyvinyl butyral resin was 72% by mass and the content of 3GO was 28% by mass, wherein the vinyl alcohol unit content of the polyvinyl butyral resin was 20.0 mol%, and the viscosity-average polymerization degree of polyvinyl alcohol as the raw material was about 1700) with 10 cm in length, 10 cm in width, and 0.76 mm in thickness was stacked and placed, and further thereon, a glass with 10 cm in length, 10 cm in width, and 3 mm in thickness was stacked and placed.

Next, the resultant was put in a vacuum bag and left at reduced pressure using a vacuum pump at room temperature for 15 minutes. Then, the temperature was increased to 100°C while the reduced pressure remained, and the resultant was heated for 60 minutes in that state. After the temperature was lowered, the pressure was returned to ambient pressure. Then, a laminated glass after prelamination was taken out.

Thereafter, the resultant was put in an autoclave and treated at 140°C and 1.2 MPa for 30 minutes to prepare a laminated glass.

### Example 13: Production of laminated glass using one obtainable by providing laminated film of functional layer (A)-attached polyvinyl acetal resin film and another film (C) (laminated film of protective layer, polyvinyl acetal resin film, and electrically conductive layer), and peeling protective layer therefrom

The liquid plasticizer was coated on the surface of the polyvinyl acetal resin film a in an amount of 10 parts by mass based on 100 parts by mass of the polyvinyl acetal resin film a. The polyvinyl acetal resin film a and a PET film (functional layer A, thickness 50 µm) having an infrared reflection layer composed of a metal sputtering layer were overlapped without generating air bubbles therebetween such that the liquid plasticizer contact surface of the polyvinyl acetal resin film a was in contact with the PET surface that had been subjected to a corona treatment of the PET film. The resultant was heated in a thermostatic chamber set at 50°C for 4 hours to obtain a functional layer (A)-attached polyvinyl acetal resin film.

The film obtained above and the film obtained in <Production of (easy-adhesive PET-attached) polyvinyl acetal resin film having electrically conductive layer> of Example 12 are stacked such that the surface on which the functional layer (A) of the polyvinyl acetal resin film was not laminated of the film obtained above was in contact with the surface having the electrically conductive layer of the film obtained in <Production of (easy-adhesive PET-attached) polyvinyl acetal resin film having electrically conductive layer>, and thermocompression-bonded by using a vacuum laminator to obtain a laminated film of the functional layer (A)-attached polyvinyl acetal resin film and the another film (C).

The obtained film was cut out in a size of 10 cm length and 10 cm width, and the easy-adhesive PET film (protective layer) was peeled therefrom. The resultant was stacked on a glass with 10 cm in length, 10 cm in width, and 3 mm in thickness such that the surface that had been adhered with the easy-adhesive PET film was in contact with the glass. Further thereon, a plasticized polyvinyl butyral resin film (the content of a polyvinyl butyral resin was 72% by mass and the content of 3GO was 28% by mass, wherein the vinyl alcohol unit content of the polyvinyl butyral resin was 20.0 mol%, and the viscosity-average polymerization degree of polyvinyl alcohol as the raw material was about 1700) with 10 cm in length, 10 cm in width, and 0.76 mm in thickness was stacked and placed, and further thereon, a glass with 10 cm in length, 10 cm in width, and 3 mm in thickness was stacked and placed.

Next, the resultant was put in a vacuum bag and left at reduced pressure using a vacuum pump at room temperature for 15 minutes. Then, the temperature was increased to 100°C while the reduced pressure remained, and the resultant was heated for 60 minutes in that state. After the temperature was lowered, the pressure was returned to ambient pressure. Then, a laminated glass after prelamination was taken out.

Thereafter, the resultant was put in an autoclave and treated at 140°C and 12 MPa for 30 minutes to prepare a laminated glass.

### Example 14: Production of laminated glass using one obtainable by providing functional layer (A)-attached polyvinyl acetal resin film prepared by using polyvinyl acetal resin film on which another layer (B) (laminated film of protective layer, polyvinyl acetal resin film, and electrically conductive layer) was laminated, and peeling protective layer therefrom

The polyvinyl acetal resin film a was thermocompression-bonded to the surface having the electrically conductive layer of the film obtained in <Production of (easy-adhesive PET-attached) polyvinyl acetal resin film having electrically conductive layer> of Example 12.

3GO was coated on the surface of the obtained polyvinyl acetal resin film a in an amount of 10 parts by mass based on 100 parts by mass of the polyvinyl acetal resin film a The polyvinyl acetal resin film a and a PET film (functional layer A, thickness 50 µm) having an infrared reflection layer composed of a metal sputtering layer were overlapped without generating air bubbles therebetween such that the liquid plasticizer contact surface of the polyvinyl acetal resin film a was in contact with the PET surface that had been subjected to a corona treatment of the PET film. The resultant was heated in a thermostatic chamber set at 50°C for 4 hours to obtain a functional layer (A)-attached polyvinyl acetal resin film produced by using the polyvinyl acetal resin film on which the another layer (B) was laminated

The obtained film was cut out in a size of 10 cm length and 10 cm width, and the easy-adhesive PET film (protective layer) was peeled therefrom. The resultant was stacked on a glass with 10 cm in length, 10 cm in width, and 3 mm in thickness such that the surface that had been adhered with the easy-adhesive PET film was in contact with the glass. Further thereon, a plasticized polyvinyl butyral resin film (the content of a polyvinyl butyral resin was 72% by mass and the content of 3GO was 28% by mass, wherein the vinyl alcohol unit content of the polyvinyl butyral resin was 20.0 mol%, and the viscosity-average polymerization degree of polyvinyl alcohol as the raw material was about 1700) with 10 cm in length, 10 cm in width, and 0.76 mm in thickness was stacked and placed, and further thereon, a glass with 10 cm in length, 10 cm in width, and 3 mm in thickness was stacked and placed.

Next, the resultant was put in a vacuum bag and left at reduced pressure using a vacuum pump at room temperature for 15 minutes. Then, the temperature was increased to 100°C while the reduced pressure remained, and the resultant was heated for 60 minutes in that state. After the temperature was lowered, the pressure was returned to ambient pressure. Then, a laminated glass after prelamination was taken out

Thereafter, the resultant was put in an autoclave and treated at 140°C and 1.2 MPa for 30 minutes to prepare a laminated glass.

### Example 15: Production of laminated glass using one obtainable by providing functional layer (A) (laminated film of protective layer and infrared absorption layer)-attached polyvinyl acetal resin film, and peeling protective layer therefrom

The liquid plasticizer was coated on the surface of the polyvinyl acetal resin film a in an amount of 10 parts by mass based on 100 parts by mass of the polyvinyl acetal resin film a. An antimony tin oxide (ATO)-containing ultraviolet curable resin was coated onto the peeling layer side of a peeling layer-attached PET film, the resultant was photocured to form a photocurable resin layer, and thereby a laminated film (thickness 70 µm) of the peeling layer-attached PET film (protective layer) and the photocurable resin layer (infrared absorption layer) was obtained. The polyvinyl acetal resin film a and the laminated film described above were overlapped without generating air bubbles therebetween such that the liquid plasticizer contact surface of the polyvinyl acetal resin film a was in contact with the infrared absorption layer of the laminated film described above. The resultant was heated in a thermostatic chamber set at 50°C for 4 hours to obtain a functional layer (A)-attached polyvinyl acetal resin film produced by using the laminated film having the protective layer as the functional layer (A).

The obtained film was cut out in a size of 10 cm length and 10 cm width, and the peeling layer-attached PET (protective layer) was peeled therefrom. The resultant was stacked on a glass with 10 cm in length, 10 cm in width, and 3 mm in thickness such that the surface of the polyvinyl acetal film was in contact with the glass. Further thereon, a plasticized polyvinyl butyral resin film (the content of a polyvinyl butyral resin was 72% by mass and the content of 3GO was 28% by mass, wherein the vinyl alcohol unit content of the polyvinyl butyral resin was 20.0 mol%, and the viscosity-average polymerization degree of polyvinyl alcohol as the raw material was about 1700) with 10 cm in length, 10 cm in width, and 0.76 mm in thickness was stacked and placed, and further thereon, a glass with 10 cm in length, 10 cm in width, and 3 mm in thickness was stacked and placed.

Next, the resultant was put in a vacuum bag and left at reduced pressure using a vacuum pump at room temperature for 15 minutes. Then, the temperature was increased to 100°C while the reduced pressure remained, and the resultant was heated for 60 minutes in that state. After the temperature was lowered, the pressure was returned to ambient pressure. Then, a laminated glass after prelamination was taken out.

Thereafter, the resultant was put in an autoclave and treated at 140°C and 12 MPa for 30 minutes to prepare a laminated glass.

### DESCRIPTION OF REFERENCE SIGNS

10 Laminated glass for measurement of heat creep resistance value
11 Glass A
12 Glass B
13 Laminate of polyvinyl acetal resin film containing plasticizer absorbed therein or functional layer-attached polyvinyl acetal resin film and plasticized polyvinyl butyral resin film
13A Polyvinyl acetal resin film containing plasticizer absorbed therein or functional layer-attached polyvinyl acetal resin film
13B Plasticized polyvinyl butyral resin film with 0.76 mm in thickness
13C Plasticized polyvinyl butyral resin film with 0.38 mm in thickness
13D Plasticized polyvinyl butyral resin film with 0.38 mm in thickness
20 Laminated glass with iron plate adhered thereto for measurement of heat creep resistance value
21 Iron plate

## Claims

1. A method for producing a polyvinyl acetal resin film containing a plasticizer absorbed therein, comprising: a contact step of bringing a liquid plasticizer into contact with a polyvinyl acetal resin film; and a heating step of heating the polyvinyl acetal resin film that has been contacted with the liquid plasticizer, wherein an amount of a plasticizer in the polyvinyl acetal resin film before the contact step is 0 to 20% by mass based on a total mass of the polyvinyl acetal resin film.

2. A method for producing a functional layer (A)-attached polyvinyl acetal resin film having a polyvinyl acetal resin film containing a plasticizer absorbed therein obtainable by the method according to claim 1 and a functional layer (A), comprising a lamination step of laminating the polyvinyl acetal resin film that has been contacted with the liquid plasticizer and the functional layer (A) such that a liquid plasticizer contact surface of the polyvinyl acetal resin film is in contact with the functional layer (A).

3. The method according to claim 2, comprising, after the contact step and the heating step, a lamination step (i) of overlapping and laminating the liquid plasticizer contact surface and the functional layer (A).

4. The method according to claim 2, comprising, in the heating step, a lamination step (ii) of overlapping, heating, and laminating the liquid plasticizer contact surface and the functional layer (A).

5. The method according to claim 2, comprising, in the contact step, a contact step with the functional layer (A) of bringing the liquid plasticizer into contact with the functional layer (A); and a step of overlapping an obtained liquid plasticizer contact surface of the functional layer (A) and the polyvinyl acetal resin film.

6. The method according to claim 2 or 4, comprising, in the contact step, a step of injecting the liquid plasticizer between the polyvinyl acetal resin film and the functional layer (A); and a step of overlapping the polyvinyl acetal resin film, the liquid plasticizer, and the functional layer (A).

7. The method according to any one of claims 2 to 6, wherein the functional layer (A) is one, two, or more layers selected from the group consisting of a colored layer, a light absorption layer, a light reflection layer, a sound insulating layer, a light scattering layer, a light emitting layer, an electrically conductive layer, a fiber layer, and a double-image-preventing layer.

8. The method according to any one of claims 2 to 7, wherein the functional layer (A) is a layer that contains one or more resins selected from the group consisting of a polyvinyl acetal resin, a polyester resin, a polycarbonate resin, a (meth)acrylic-based resin, a polyolefin resin, and an ionomer resin as a resin component.

9. The method according to claim 8, wherein the functional layer (A) is a layer that contains the polyvinyl acetal resin as the resin component and contains the plasticizer in an amount of less than 16% by mass based on a total mass of the functional layer (A).

10. The method according to any one of claims 2 to 9, wherein the functional layer (A) has a thickness of 0.01 to 300 µm.

11. The method according to any one of claims 1 to 10, wherein in the contact step, the liquid plasticizer is brought into contact with the polyvinyl acetal resin film in an amount of more than 0 part by mass and 50 parts by mass or less based on 100 parts by mass of the polyvinyl acetal resin film.

12. A method for producing a laminated film of a polyvinyl acetal resin film containing a plasticizer absorbed therein obtainable by the method according to claim 1 and another film (C), comprising a lamination step of laminating the polyvinyl acetal resin film containing the plasticizer absorbed therein and another film (C).

13. A method for producing a laminated film of the functional layer (A)-attached polyvinyl acetal resin film obtainable by the method according to any one of claims 2 to 10 and another film (C), comprising a lamination step of laminating the functional layer (A)-attached polyvinyl acetal resin film and another film (C).

14. The method according to claim 12 or 13, wherein the another film (C) is a resin film with one or more layers each having any function of a coloring function, a sound insulating function, a thermally insulating function, a light emitting function, a protective function, an electrical conductive function, or a double-image-preventing function.

15. The method according to any one of claims 12 to 14, wherein the another film (C) is a resin film that contains one or more resins selected from the group consisting of a polyvinyl acetal resin, a polyester resin, a polycarbonate resin, a (meth)acrylic-based resin, a polyolefin resin, and an ionomer resin as a resin component

16. The method according to any one of claims 1 to 15, wherein the contact is performed by printing or coating.

17. The method according to any one of claims 1 to 16, wherein the content of the plasticizer in the liquid plasticizer is 20 to 100% by mass.

18. The method according to any one of claims 1 to 17, wherein the polyvinyl acetal resin film before the contact step is laminated with another layer (B).

19. The method according to claim 18, wherein the another layer (B) is one or more functional layers (X) selected from the group consisting of a colored layer, a light absorption layer, a light reflection layer, a sound insulating layer, a light scattering layer, a light emitting layer, an electrically conductive layer, a fiber layer, a double-image-preventing layer, and a protective layer.

20. The method according to any one of claims 1 to 19, wherein the plasticizer in the liquid plasticizer is a compound in which at least one terminal of an oligoalkylene glycol having a repeating unit of 2 to 10 is bonded to a group having 2 to 14 carbon atoms by an ether bond or ester bond, or an ester compound of an oligocarboxylic acid compound having 2 to 14 carbon atoms with an alcohol compound having 2 to 14 carbon atoms.

21. The method according to any one of claims 1 to 20, wherein the polyvinyl acetal resin film has a thickness of 10 to 350 µm.

22. The method according to any one of claims 1 to 21, wherein a polyvinyl acetal resin of the polyvinyl acetal resin film is a polyvinyl butyral resin.

23. The method according to any one of claims 1 to 22, wherein a viscosity of a solution containing 10% by mass of a polyvinyl acetal resin of the polyvinyl acetal resin film in toluene/ethanol (1/1 mass ratio) measured at 20°C and 30 rpm using a Brookfield viscometer (B type) is 400 mPa·s or less.

24. The method according to any one of claims 1 to 23, wherein a viscosity of a solution containing 10% by mass of a polyvinyl acetal resin of the polyvinyl acetal resin film in toluene/ethanol (1/1 mass ratio) measured at 20°C and 30 rpm using a Brookfield viscometer (B type) is more than 200 mPa·s.

25. The method according to any one of claims 1 to 24, wherein a polyvinyl acetal resin of the polyvinyl acetal resin film has a molecular weight distribution of 2.7 or more.

26. The method according to any one of claims 1 to 25, wherein a liquid plasticizer contact surface of the polyvinyl acetal resin film has a surface roughness Rz of 5 µm or less.

27. The method according to any one of claims 1 to 26, wherein the polyvinyl acetal resin film has one or more functions selected from the group consisting of colored, light absorption, light reflection, light scattering, light emission, and electrical conduction.

28. The method according to any one of claims 1 to 27, wherein the liquid plasticizer contains a functional material to form one or more functional layers (Y) selected from the group consisting of a colored layer, a light absorption layer, a light reflection layer, a sound insulating layer, a light scattering layer, a light emitting layer, an electrically conductive layer, a fiber layer, and a double-image-preventing layer.

29. The method according to any one of claims 1 to 28, wherein, in the heating step, heating is performed at 40°C or higher and 100°C or lower.

30. A functional layer (A)-attached polyvinyl acetal resin film obtainable by the method according to any one of claims 2 to 11 and 13 to 29.

31. A polyvinyl acetal resin film containing a plasticizer absorbed therein obtainable by the method according to any one of claims 1,11,16,17, and 20 to 29.

32. A film obtainable by providing a laminated film with another film (C) obtainable by the method according to claim 14 in which the another film (C) is the resin film with the layer having the protective function, and peeling the layer having the protective function from the laminated film.

33. A polyvinyl acetal resin film containing a plasticizer absorbed therein obtainable by providing a polyvinyl acetal resin film containing a plasticizer absorbed therein obtainable by the method according to claim 19 in which the polyvinyl acetal resin film before the contact step is laminated with the protective layer as the another layer (B), and peeling the protective layer from the polyvinyl acetal resin film containing the plasticizer absorbed therein.

34. A functional layer (A)-attached polyvinyl acetal resin film obtainable by providing a functional layer (A)-attached polyvinyl acetal resin film obtainable by the method according to claim 19 in which the polyvinyl acetal resin film before the contact step is laminated with the protective layer as the another layer (B), and peeling the protective layer from the functional layer (A)-attached polyvinyl acetal resin film.

35. A functional layer (A)-attached polyvinyl acetal resin film obtainable by providing the functional layer (A)-attached polyvinyl acetal resin film according to claim 30 in which the functional layer (A) has a protective layer, and peeling the protective layer from the functional layer (A)-attached polyvinyl acetal resin film having the protective layer.

36. The functional layer (A)-attached polyvinyl acetal resin film according to claim 30 or the polyvinyl acetal resin film containing the plasticizer absorbed therein according to claim 31, wherein a value representing heat creep resistance measured by joining either the functional layer (A)-attached polyvinyl acetal resin film according to claim 30 or the polyvinyl acetal resin film containing the plasticizer absorbed therein according to claim 31 and one sheet of plasticized polyvinyl butyral resin film is 10 mm or less, the plasticized polyvinyl butyral resin film having a thickness of 0.76 mm and containing 72% by mass of a polyvinyl butyral resin in which a viscosity-average polymerization degree of polyvinyl alcohol as a raw material is 1700, an acetalization degree is 69 to 71 mol%, and a vinyl acetate unit content is 1 mol% or less and 28% by mass of triethylene glycol-bis-(2-ethylhexanoate).

37. The functional layer (A)-attached polyvinyl acetal resin film according to claim 30 or the polyvinyl acetal resin film containing the plasticizer absorbed therein according to claim 31, wherein a value representing heat creep resistance measured by placing and joining either the functional layer (A)-attached polyvinyl acetal resin film according to claim 30 or the polyvinyl acetal resin film containing the plasticizer absorbed therein according to claim 31 between two sheets of plasticized polyvinyl butyral resin films is 10 mm or less, the plasticized polyvinyl butyral resin films each having a thickness of 0.38 mm and containing 72% by mass of a polyvinyl butyral resin in which a viscosity-average polymerization degree of polyvinyl alcohol as a raw material is 1700, an acetalization degree is 69 to 71 mol%, and a vinyl acetate unit content is 1 mol% or less and 28% by mass of triethylene glycol-bis-(2-ethylhexanoate).

38. A laminate in which the functional layer (A)-attached polyvinyl acetal resin film according to claim 30 or the polyvinyl acetal resin film containing the plasticizer absorbed therein according to claim 31 is sandwiched between two transparent substrates.

39. The laminate according to claim 38, wherein the polyvinyl acetal resin film containing the plasticizer absorbed therein is directly in contact with the transparent substrate.

40. A laminated glass provided with the laminate according to claim 38 or 39, wherein each of the two transparent substrates is a glass.
